(19) Europäisches Patentamt / European Patent Office / Office européen des brevets

(11) **EP 3 833 471 B1**

(12) **EUROPÄISCHE PATENTSCHRIFT**

(45) Veröffentlichungstag und Bekanntmachung des Hinweises auf die Patenterteilung:
**20.04.2022   Patentblatt 2022/16**

(21) Anmeldenummer: **19748545.1**

(22) Anmeldetag: **05.08.2019**

(51) Internationale Patentklassifikation (IPC):
**B01J 19/24** (2006.01)       **C04B 35/01** (2006.01)

(52) Gemeinsame Patentklassifikation (CPC):
(C-Sets verfügbar)
**B01J 19/24; B32B 18/00; C01B 3/042; C01B 3/24;**
**C01B 3/34; C01B 13/0207; C04B 35/14;**
**C04B 35/18; C04B 35/80; C04B 38/10;**
B01J 2219/0002; C04B 2111/00612;
C04B 2235/6021; C04B 2235/96; C04B 2237/34;
(Forts.)

(86) Internationale Anmeldenummer:
**PCT/EP2019/071031**

(87) Internationale Veröffentlichungsnummer:
**WO 2020/030598 (13.02.2020 Gazette 2020/07)**

(54) **VORRICHTUNG AUS EINEM DRUCKTRAGENDEN VORRICHTUNGSMANTEL UND EINEM INNENLIEGENDEN GERÜSTSYSTEM**

MODULAR, SELF-SUPPORTING SCAFFOLDING SYSTEM

SYSTÈME D'ÉCHAFAUDAGE AUTO-SUPPORTANT MODULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2018   EP 18187508**

(43) Veröffentlichungstag der Anmeldung:
**16.06.2021   Patentblatt 2021/24**

(73) Patentinhaber: **BASF SE**
**67056 Ludwigshafen am Rhein (DE)**

(72) Erfinder:
• **KOLIOS, Grigorios**
  **67056 Ludwigshafen (DE)**
• **ZOELS, Bernd**
  **67056 Ludwigshafen (DE)**
• **APPEL, Hagen**
  **67056 Ludwigshafen (DE)**
• **BERNNAT, Jens**
  **67056 Ludwigshafen (DE)**
• **GLENK, Friedrich**
  **67056 Ludwigshafen (DE)**
• **FLICK, Dieter**
  **67056 Ludwigshafen (DE)**
• **OLBERT, Gerhard**
  **67056 Ludwigshafen (DE)**
• **SCHEIFF, Frederik**
  **67056 Ludwigshafen (DE)**
• **ANDERLOHR, Christopher Alec**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
WO-A1-89/05285          WO-A1-2011/018516
WO-A2-2004/111562       DE-B3-102015 202 277
DE-U1- 8 714 113

(52) Gemeinsame Patentklassifikation (CPC): (Forts.)
C04B 2237/343; C04B 2237/348; C04B 2237/368;
C04B 2237/704; C04B 2237/76; Y02E 60/36

C-Sets
**C04B 38/10**

**Beschreibung**

Die vorliegende Erfindung betrifft eine Vorrichtung aus mindestens einem drucktragenden Vorrichtungsmantel und mindestens einem innerhalb des Vorrichtungsmantels angeordneten, modularen Gerüstsystem aus keramischen Faserverbundwerkstoffen und eine modulare Auskleidungsvorrichtung beinhaltend neben dem modularen Gerüstsystem Feuerfeststeine, sowie die Verwendung dieser Vorrichtung für Hochtemperaturreaktoren, insbesondere elektrisch beheizte Hochtemperaturreaktoren.

Stark endotherme Reaktionen stehen häufig am Anfang der Wertschöpfungskette der chemischen Industrie, beispielsweise bei der Spaltung von Erdölfraktionen, der Reformierung von Erdgas oder Naphtha, der Dehydrierung von Propan, der Dehydroaromatisierung von Methan zu Benzol oder der Pyrolyse von Kohlenwasserstoffen. Temperaturen zwischen 500°C und 1700°C sind erforderlich, um technisch und wirtschaftlich interessante Ausbeuten zu erreichen. Der Grund hierfür liegt hauptsächlich in der thermodynamischen Limitierung des Gleichgewichtsumsatzes.

Endotherme Reaktionen zur Herstellung von Grundprodukten in der chemischen Industrie erfordern aufgrund der hohen Temperaturen eine wirksame thermische Isolation des Reaktors gegen die Umgebung. Ferner werden für einige Reaktionen druckbeständige Reaktionsstrecken benötigt, so dass die Reaktionskammer bis auf definierte Zu- und Abläufe hermetisch gegen die Umgebung abgedichtet sein muss. Des Weiteren werden einige der genannten endothermen Reaktionen unter reduzierenden Bedingungen durchgeführt. Ferner benötigen endotherme Reaktionen ein leistungsfähiges Konzept für die Wärmeversorgung. Im Fall der direkten elektrischen Beheizung muss zusätzlich der Reaktorinnenraum, z.B. eine Schüttung, gegen die seitliche Reaktorhülle elektrisch isoliert werden.

DE 87 14 113 U1 beschreibt einen modularen Druckbehälter, dessen drucktragender Mantel aus übereinander aufgeschichteten ebenen flachen metallischen Ringen besteht, die ggf. durch vertikale angeordnete Spannelemente zusammengehalten werden. Der Behälterboden und/oder Deckel kann ggf. aus eng aneinander liegenden, sternförmig von der Behälterwand zur Achse hin verlaufenden, einzelnen Rippenelementen gebildet sein. Es wird beschrieben, dass sich an der innenliegenden Behälterwand eine flächige Isolationsschicht aus Keramik befinden kann; ferner kann diese Isolationsschicht durch eine dünne metallische Schicht, sog. Innenhemd, geschützt werden. Nachteilig an diesem Stand der Technik ist, dass die keramische Isolationsschicht fest mit dem drucktragenden Mantel verbunden ist. Ferner ist das metallische Innenhemd, das die keramische Schicht gegen das Reaktionsvolumen trennt, elektrisch leitend und weniger temperaturbeständig als die keramische Auskleidung. Dadurch ist diese Lösung nicht anwendbar auf Reaktoren mit elektrisch beheizbarer Packung. Es wird ferner nicht offenbart, wie die Einheit bestehend aus drucktragendem Mantel, keramischer Isolationsschicht und metallischem Innenhemd die thermische Ausdehnung ausgleichen soll.

US 2,982,622 offenbart ein Konzept für die elektrische Beheizung endothermer Reaktionen. Dabei werden elektrisch leitfähige Partikel als Fließbett durch die Reaktionskammer geleitet. Über Elektroden wird ein elektrischer Strom durch die Partikelschüttung geleitet, die auf diese Weise als Widerstandsheizung funktioniert und eine direkte Beheizung der Reaktionskammer bewirkt. Durch die Gegenstromführung des Gas- und des Partikelstroms wird eine effiziente Wärmeintegration innerhalb des Apparates erzielt, so dass der Hochtemperaturbereich im mittleren Teil der Reaktionskammer lokalisiert ist, während der obere und untere Rand des Reaktors kalt bleiben. Dieses Prinzip ist auf zahlreiche technisch relevante endotherme Reaktionen anwendbar. Die PCT-Anmeldung mit der Anmeldenummer PCT/EP2019/051466 konkretisiert die Ausführung der elektrischen Beheizung und offenbart eine beheizbare gepackte Vorrichtung zur Durchführung von endothermen Reaktionen, wobei das vertikal angeordnete Elektroden in einer elektrisch-leitenden Feststoff-Packung angeordnet ist und die Elektroden über den gesamten oberen bzw. untere Haube des Reaktors angeschlossen sind und die stromführenden Verbindungselemente große Kontaktflächen zu den Elektroden aufweisen..

In den Reaktoren für Hochtemperaturreaktionen werden typischerweise Auskleidungen verwendet, die den drucktragenden Metallmantel des Reaktors vor der Einwirkung hoher Temperaturen schützen, Wärmeverluste herabsetzen und/oder den Metallmantel vor elektrischer Leistung schützen. Diese Auskleidungen müssen teilweise sehr hohen Temperaturen und Drücken, chemischen Korrosionsangriff, Erosion durch Partikel und thermischer Wechselbeanspruchung widerstehen. Die Temperaturwechselbelastungen kann beispielsweise aus der Chargenfahrweise sowie dem Einleiten kalter Prozessstoffe resultieren.

Die Anforderungen an die feuerfeste Auskleidung für chemische Hochtemperaturreaktionen sind demnach vielfältig und stehen teilweise im Widerspruch zueinander. Zum einen sind ein hohes Dämmvermögen und eine geringe Rohdichte/hohe Porosität, zum anderen eine ausreichende mechanische Festigkeit, aber ebenfalls gute Bearbeitbarkeit notwendig. Weiterhin wird eine hohe thermische Beständigkeit unter vielfältigen atmosphärischen Bedingungen gefordert.

Reaktorkonzepte, die auf eine thermische Auskleidung verzichten, wie beispielsweise der Lurgi Druckvergaser, besitzen einen doppelwandigen Druckmantel, der mit Wasser zwangsgekühlt wird. Die Vorteile dieses Konzeptes sind der einfache Aufbau und das geringe Gewicht des Reaktors sowie die niedrige Temperaturbelastung des Reaktormantels. Nachteilig an diesem Konzept sind die konstruktive und regelungstechnische Komplexität sowie die mangelnde Ausfallsicherheit des Kühlsystems. Außerdem ist dieses Konzept ungeeignet für Reaktoren mit direkter elektrischer Beheizung, wo elektrischer Strom durch eine Schüttung geleitet werden muss. In diesem Fall würde ein Kurzschluss zwischen der Schüttung und dem drucktragenden Reaktormantel entstehen.

Üblicherweise werden für eine Auskleidung Feuerfeststeine eingesetzt. Naturgemäß weisen diese gebrannten Feuerfest-Produkte eine offene Porosität auf, die etwa im Bereich zwischen 13 und 20 Vol.-% liegt. In diese offenen Poren können Prozessstoffe wie Schlacken, Schmelzen oder Gase eindringen und durch chemische Reaktionen den Stein zersetzen und/oder zu vollkommen geänderten thermomechanischen Eigenschaften des Gefüges führen. Wechselnde chemische Angriffe sowie wechselnde thermische und thermomechanische Belastungen führen zu beschleunigtem Verschleiß und zu Schäden wie z.B. zum Abplatzen großer Stücke, die eine Dicke von mehreren Millimetern aufweisen können). Die Lebensdauer ist daher limitiert und beim Erreichen eines bestimmten Verschleißmaßes ist ein Austausch der jeweiligen Auskleidung, der mit hohem Aufwand und Kosten verbunden ist, erforderlich.

Ein weiterer Nachteil an diesen porösen Materialien ist, dass es bei höheren Reaktionsdrücken ab ca. 10 bar zu Konvektionsströmungen in den Steinen kommen kann, die den Wärmetransport zur Rohrwand verstärken und somit die Isolationsleistung absenken können. Als Feuerfeststeine werden im Stand der Technik $Al_2O_3$ (Korund), Phosphatgebundenes $Al_2O_3$, Zementgebundenes $Al_2O_3$, Chromkorund $Al_2O_3$-$Cr_2O_3$ ("Aurex 75" und "Aurex 90", Radex-BCF), MgO-$Cr_2O_3$, $Cr_2O_3$, $Al_2O_3$-$Cr_2O_3$-$ZrO_2$ ("Zichrom 60"), $Cr_2O_3$-$ZrO_2$ ("Zichrom 90"), $AlPO_4$, $CrPO_4$ ("Aurex 95P") offenbart [Gehre, P. (2013). Korrosions-und thermoschockbeständige Feuerfestmaterialien für Flugstromvergasungsanlagen auf $Al_2O_3$-Basis-Werk-stoffentwicklung und Korrosionsuntersuchungen. Dissertation, Technische Universität Bergakademie Freiberg, Kapitel 2.3.1]. Weiter sind als Feuerfestwerkstoff Siliciumcarbid und Kohlenstoff, bevorzugt in Form von Grafit bekannt. Als besonders thermoschockbeständiger Feuerfeststein sind 6Gew%$ZrO_2$-$Cr_2O_3$-$Al_2O_3$ offenbart.

Ferner werden als Feuerfeststeine in DE 10 2015 202 277 und WO 89/5285 Steine aus aufgeschäumten Keramiken offenbart. Nachteilig am Aufbau einer Auskleidung bestehend aus ausschließlich Feuerfeststeinen ist, dass sie gestützt werden muss, um horizontale Kräfte aufzunehmen, beispielsweise die Last einer Schüttung. Ferner ist eine durchgängig aus Feuerfeststeinen bestehende Auskleidung anfällig für Risse, bedingt durch die thermische Ausdehnung der Konstruktion. Ohne eine Unterstützung können sich Steine aus der Auskleidung lösen. Als Folge kann die Auskleidung strukturell geschwächt werden und zusammenbrechen und / oder ihre isolierende Wirkung verlieren und dadurch Schäden an der Hülle eines Apparates verursachen.

Die Suche nach temperaturbeständigen tragenden Strukturen ist ferner auf dem Gebiet der Wärmebehandlungsprozesse von Bauteilen bekannt. In WO 2011/18516 und WO 2004/111562 werden planare, modulare Werkstückträger offenbart, die aus stegartigen Faserkeramiken, z.B. kohlefaserverstärkten Kohlenstoff-Verbundmaterial, bestehen. Nachteilig an diesen Trägern ist, dass sie nur lose auf dem tragenden Untergrund gelagert sind. Ohne eine feste Verankerung können sie keine horizontalen Kräfte aufnehmen, wie sie beispielsweise durch die Last einer Schüttung entstehen. Ferner haben die Werkstückträger keine Funktion als thermisch und elektrisch isolierende Schichten.

US 8,211,524 offenbart eine Ankerstruktur aus keramischen Faserverbundwerkstoffen, die ein metallisches Substrat mit einer keramischen Isolationsschicht verbindet. Die Struktur aus dem keramischen Faserverbundwerkstoff ragt jeweils in die metallische und in die keramische Schicht hinein und ist mit diesen formschlüssig verbunden. Nachteilig an dieser Ankerstruktur ist, dass diese sowohl zur keramischen als auch zur metallischen Schicht hin starr verbunden ist. Diese Verbindung ist nicht lösbar ohne die Struktur zu zerstören.

Kommerziell werden derzeit Auskleidungen z.B. in Hochofenprozessen, bei der Partialoxidation von Kohlenwasserstoffen zu Synthesegas und in der Metallurgie (Carbid-Verfahren) eingesetzt. Beispielsweise wird ein Hochofen zonenweise mit passenden Werkstoffen ausgekleidet: (i) Gicht mit Schamott mit 39-42 Gew% $Al_2O_3$ (konventionell) oder dem neueren Werkstoff Superduty Schamotte, (ii) Schacht mit Schamott mit 39-42 Gew% $Al_2O_3$ (konventionell) oder dem neueren Werkstoff Korund, SiC-Si3N4, (iii) Kohlensack mit Schamott mit 62 Gew% $Al_2O_3$, Mullit (konventionell) oder dem neueren Werkstoff SiSiC, (iv) Rast mit Schamott mit 42-62 Gew% $Al_2O_3$, Mullit, Kohlenstoff (konventionell) oder dem neueren Werkstoff SiC, Chromkorund, (v) Gestell mit 42-62 Gew% $Al_2O_3$, Mullit, Kohlenstoff (konventionell) oder dem neueren Werkstoff Kohlenstoff/Graphit mit super Mikroporen.

Im Stand der Technik sind verschiedene Ausführungen von Befestigungen von Auskleidungen bekannt ("Feuerfestbau" der Deutsche Gesellschaft Feuerfest- und Schornsteinbau e.V.):

In technischen Apparaten sind die Feuerfestmaterialien üblicherweise mit Ankern an der tragenden Konstruktion, beispielsweise einer Stahlkonstruktion, verbunden. Die Anker können aus keramischen oder metallischen Materialien bestehen. Keramikanker sind immer mit einem metallischen Halteelement an der Stahlkonstruktion verbunden. Die Halte-(Anker-) Steine müssen dabei die gleiche Qualität haben wie das Material auf der heißen Seite (Innenseite). Die Auswahl von Typ und Material hängt von den Anforderungen ab, die durch die Konstruktion des Bauteils sowie Temperatur- und Korrosionsbeanspruchung gegeben sind.

Ferner wird beschrieben, dass die feuerfesten Steine vermauert und in bestimmten Abständen mit speziellen Stahlankern an einer Metallwand gehalten werden. Zur Sicherung des Mauerwerks und zur Beherrschung der thermischen Dehnung ist es notwendig, dass metallische Konsolen aus hitzefestem Stahl angeordnet werden, die die Steine in bestimmten Abständen unterstützen. Die Steine haben etwa die Größe von Backsteinen und werden auf übliche Weise mit Mörtel verfugt.

Ferner wird beschrieben, dass jeder Stein mit einer Plattenhalterung an der zu schützenden Rohrwand befestigt wird. Z.B. wird jede Platte einerseits von einem an der Rohrwand angeschweißten Stift getragen und in Wandrichtung zurückgehalten und anderseits mittels eines SiC-Mörtels mit der Rohrwand verklebt. Alternative wird jede Platte an einer von der Rohrwand schräg nach oben verlaufenden stiftartigen Plattenhalterung eingehängt.

Ferner sind wärmedämmende Auskleidungen von Industrieöfen mit feuerfesten Blöcken und Stahlankern offenbart, wobei in den Schmalseiten jedes Steines eine umlaufende Nut eingeformt ist, so dass ein Stahlanker mit einer Spitze in die Nut eines Blockes eingreift und die Blöcke umlaufend formschlüssig mittels ausgehärteter feuerfester Masse verankert sind.

Alle im Stand der Technik beschriebenen Auskleidung sind an dem drucktragenden Reaktormantel, meistens einer metallischen Wand, abgestützt. Die Wahl, die drucktragende Wand als Stütze für die Auskleidung einzusetzen, hat den Vorteil im einfachen Aufbau dieser konstruktiven Einheit.

Ein Schwachpunkt der Auskleidungen sind die Verbindungen zwischen metallischen Ankern und den Ankersteinen. Bedingt durch die unterschiedlichen Ausdehnungskoeffizienten der Werkstoffe in Kombination mit Temperaturdifferenzen und mechanischer Belastung können sich diese Verbindungen lösen. Als Konsequenz kann die Auskleidung großflächig die Halterung verlieren. So können Blöcke aus der Auskleidung herausfallen. Die entstehenden Lücken können zu Folgeschäden führen. Beispielsweise wird die Wärmedämmung zwischen der Reaktionsstrecke und der drucktragenden Reaktorwand geschwächt, so dass die drucktragende Wand überhitzt. Auch können beispielsweise Partikel aus der Schüttung der Reaktionsstrecke in die Lücken eindringen und einen elektrischen Kurzschluss zwischen der Schüttung und der drucktragenden Reaktorwand verursachen.

Ein bei Auskleidungs-Systemen häufig auftretendes Problem ist die Beschädigungsanfälligkeit der Auskleidung bei zu raschem Temperaturänderungen, da z.B. Auskleidung und drucktragende Reaktorwand unterschiedliche thermische Ausdehnungskoeffizienten aufweisen und zudem verschieden schnell erhitzt werden. Da die Bewegungsfreiheit einzelner Steine durch die Halterung eingeschränkt ist, kann bei sprunghaften Temperaturänderungen eine spannungsfreie Verformung oder Verschiebung der Steine soweit gehemmt sein, dass sie reißen oder die Halterung beschädigen. Dies kann bereits bei einem einmaligen Auftreten einer schnellen, lokalen Temperaturänderung, z.B. durch einen Störfall, passieren.

Der Ausgleich von Differenzen in der Wärmeausdehnung wird im Stand der Technik durch die Verwendung von Dehnfugen zwischen den Steinen der Auskleidung gelöst. Schwachpunkt dieser Dehnfugen ist die Bildung von Lücken im Gefüge der Auskleidung, in die Partikel und Gase aus der Reaktionsstrecke eindringen können. Dadurch können undefinierte und unerwünschte Bypass-Ströme entstehen. Um dieses Problem beim Anfahren zu umgehen, müssen sehr langsame Aufheizraten, in der Regel < 3K/min, gewählt werden. Die resultierenden langen Anfahrzeiten können die effektive Kapazität von Hochtemperaturreaktoren empfindlich beeinträchtigen.

Durch die mechanische Verbindung der Auskleidung mit der drucktragenden Wand ist die Montierbarkeit, Zugänglichkeit und Reparaturfreundlichkeit des Apparates eingeschränkt. Z.B. ist es nicht möglich den Reaktormantel vom Reaktorboden anzuheben. Ferner lassen sich beschädigte einzelne Steine nur durch einen kompletten Ausbau der Auskleidung ausbessern oder ersetzen.

Bei den im Stand der Technik offenbarten Auskleidungen bleiben zusammengefasst folgende Anforderungen ungelöst:

Die elektrische Isolation der Auskleidung ist nicht ausreichend gewährleistet.
Eine aktive Kühlung des Reaktormantels ist sicherheitstechnisch kritisch (Ausfallsicherheit, Kontamination des Reaktorinhaltes und unerwünschte Nebenreaktionen).
Temperatur- und / oder Druckschwankungen können die Auskleidung zerstören und erhebliche Folgeschäden an der Reaktorstruktur verursachen.
Die hohe Masse der Auskleidung erschwert die Handhabung des Reaktors.
Die Montage und Demontage z.B. nach Störfällen ist schwierig und aufwendig.
Das Anfahr- und Abfahrverhalten ist langsam und träge, beispielsweise das Abkühlen bei Störungen.

Folglich fehlen für Hochtemperatur-Druckreaktionen Lösungen für eine gute Wärmeisolation und für eine niedrige Gaspermeabilität der Auskleidung im Bereich der hohen Temperaturen; sowie für eine mechanische und galvanische Trennung zwischen der Auskleidung und dem drucktragenden Mantel.

Die zugrundeliegende Aufgabe war demnach, eine modulare, selbsttragende Vorrichtung aufzuzeigen, die als elektrische und/oder thermische Isolation dient und die mechanisch von dem drucktragenden Reaktormantel getrennt ist. Ferner bestand die Aufgabe, ein modulares, selbsttragendes Gerüst für eine Auskleidung für Hochtemperaturreaktoren aufzuzeigen, um eine mechanische Trennung der Auskleidung von dem Reaktormantel zu erreichen. Eine weitere Aufgabe war, eine Auskleidung aufzuzeigen, die eine apparativ einfache elektrische Isolation zwischen der Reaktionsstrecke im Innenraum des Reaktors und dem drucktragenden Reaktormantel ermöglicht. Eine weitere Aufgabe war, eine Auskleidung aufzuzeigen, die einem Reaktionsdruck von bis zu 60 bar standhält und dabei zuverlässig die wärmedämmende Wirkung beibehält. Eine weitere Aufgabe war, eine Auskleidung aufzuzeigen, die eine lange Lebensdauer durch erhöhte chemische Korrosionsfestigkeit, erhöhte thermische Wechselbeständigkeit und erhöhten Widerstand gegen Werkstoffabplatzungen zeigt.

Überraschenderweise konnte ein Vorrichtungssystem, insbesondere ein Reaktor, aus mindestens einem drucktragenden Vorrichtungsmantel und mindestens einem innerhalb des Vorrichtungsmantels angeordneten modularen Gerüstsystem, aus mindestens zwei unterschiedlichen Steg-Arten aufgezeigt werden, dass dadurch gekennzeichnet ist, dass mehrere Querstege mindestens ein Prisma oder einen Zylinder bilden und mehrere Seitenstege in das Prisma- oder Zylinder-Innere hineinragen, wobei die Querstege und die Seitenstege ineinander einsteckbar sind und/oder mit Hilfe von einem oder mehreren Verbindungselementen verbindbar sind, wobei der Werkstoff der Stege keramische Faserverbundwerkstoffe beinhaltet.

Ferner konnte ein selbsttragendes Gerüstsystem beinhaltend keramische Faserverbundwerkstoffe aufgezeigt werden, das Feuerfeststeine, beinhaltend aufgeschäumte keramische Werkstoffe, aufweist, wobei die Steine durch das erfindungsgemäße modulare Gerüstsystem gestützt werden.

Im Folgenden wird das innenliegende, modulare Gerüstsystem beschrieben:
Bevorzugt bilden die Querstege ein gleichmäßiges Prisma, mit einem Vieleck als Grundfläche, oder einen gleichmäßigen Zylinder, mit einem Kreis als Grundfläche.

Bevorzugt sind die Aussparungen als Schlitze oder Löcher, vorteilhaft mit Lochformen wie in DIN 24041 beschrieben, z.B. Langlöcher, bevorzugt eckige Langlöcher oder Langlöcher mit abgerundeten Ecken, ausgebildet.

Als Verbindungselemente können vorteilhaft formschlüssige und / oder stoffschlüssige Verbindungen zwischen den Querstegen und den Seitenstegen, z.B. kombinierte Steckverbindungen und Klebeverbindungen verwendet werden, bevorzugt Verzapfung, Überplattung oder Zinkung.

Unter "Gerüst" wird in der vorliegenden Erfindung verstanden: Vertikale Stege, die bevorzugt kreuzweise miteinander verbunden sind und die Seitenkräfte einer möglichen Auskleidung flächig aufnehmen können. Durch das Gerüst kann die Auskleidung vorteilhaft in Segmente unterteilt werden, die in radialer Richtung und in Umfangsrichtung begrenzt sein können.

Unter "selbsttragend" wird in der vorliegenden Erfindung ein Gerüst verstanden, dass auch bei Drücken von bis zu 60 MPa keine Abstützungen, insbesondere keine seitlichen Abstützungen durch eine Wand benötigen. Im Inneren des Gerüsts können durch den Strömungsverlust und die sog. Silokräfte einer möglichen Schüttungen Spannungen von ca. 0,5 MPa herrschen.

Unter "drucktragender Vorrichtungsmantel, bzw. drucktragender Reaktormantel" wird die Begrenzung eines Behälters, die einer Druckdifferenz zwischen dem Inneren und der Umgebung des Behälters standhält, verstanden. Der drucktragende Reaktormantel umfasst im Wesentlichen drei Abschnitte: den unteren Abschluss, den oberen Abschluss und die Seitenwand des Behälters.

Unter "Auskleidung" wird ein Schutz verstanden, der aus Platten, Steinen oder Formteilen besteht, die durch Mörtel oder Kitt verbunden sein können, einschließlich dichtender oder dämmender Zwischenschichten; ferner werden alle aufgetragenen Schichten und keramischen Einbauten darunter verstanden, die gegen mechanische, thermische und chemische Einflüsse weitgehend beständig sind (DIN 28060 und DIN 28071). Seit 1986 wurde der Begriff Ausmauerung durch Auskleidung ersetzt (DIN 28071).

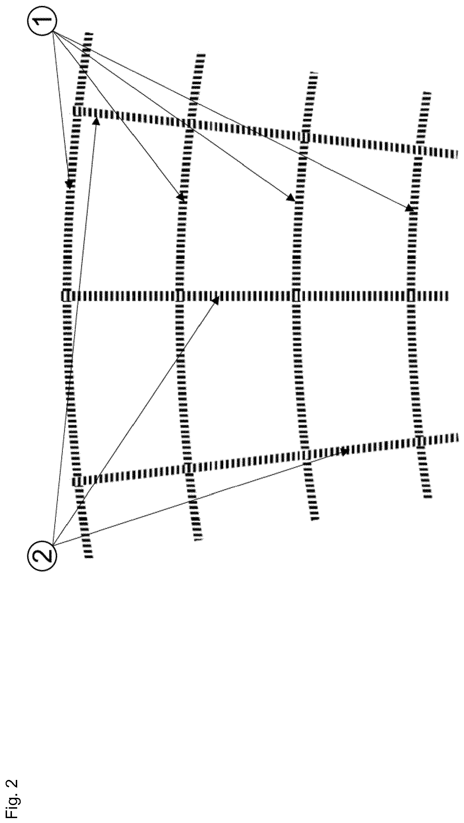

Unter "Segment" werden die Moduleinheiten des Gerüsts in Umfangsrichtung bezeichnet. Die Querstege definieren die Abgrenzung der Segmente in radialer Richtung. Die Seitenstege definieren die Position der Segmente in Umfangsrichtung, wobei die Lücken zwischen den in Umfangsrichtung benachbarten Querstegen bzw. die in diese Lücken eingesteckten Trennstege das Segment in Umfangsrichtung begrenzen (siehe Figuren 2 bis 4).

Unter einem "Kasten" wird der Bereich verstanden, den zwei in radialer Richtung benachbarte parallele oder konzentrisch-ellipsenbogenförmige, bevorzugt parallele oder konzentrisch kreisbogenförmige, Querstege und die entsprechenden Seitenstege, sowie ggf. die Lücke zwischen den in Umfangsrichtung benachbarten Querstegen bzw. der in diese Lücke vorteilhaft eingesteckte Trennsteg einschließen (siehe Figuren 2 bis 4).

Bei den Angaben "vorne" oder "Vorderseite" wird die Fläche verstanden, die zur Innenseite des Reaktors gerichtet ist. Unter den Angaben "hinten", "äußere" oder Rückseite" wird die Fläche verstanden, die zum äußeren Umfang des Reaktors gerichtet ist. Die Angaben "oben", "unten" und "seitlich" beziehen sich auf einen aufrecht stehenden Reaktor. Die Angaben "unten", "mittlere" und "oben" werden im geodätischem Sinne verwendet.

Unter "keramische Faserverbundwerkstoffe" werden faserverstärkte keramische, insbesondere oxidkeramische, Werkstoffe wie beispielsweise in M. Schmücker, "Faserverstärkte oxidkeramische Werkstoffe", Materialwissenschaften und Werkstofftechnik, 2007, 38, No. 9, 698-704, beschrieben, verstanden. Ein keramischer Faserverbundwerkstoff enthält ein Fasergerüst, ein Gewebe, ein Gelege, ein Gestrick und/oder ein Geflecht aus keramischen Fasern und eine Füllmatrix aus gesintertem keramischen Pulver.

Die Faserverbundwerkstoffe sind demnach charakterisiert durch eine Matrix aus keramischen Partikeln zwischen denen keramische Fasern, insbesondere Endlosfasern mit einer Faserlänge von > 50 mm, als Wickelkörper oder als Textil eingebettet sind. Es wird von faserverstärkter Keramik, Verbundkeramik oder auch Faserkeramik gesprochen. Matrix und Faser können dabei im Prinzip aus allen bekannten keramischen Werkstoffen bestehen, wobei in diesem Zusammenhang auch Kohlenstoff als keramischer Werkstoff behandelt wird.

Unter "oxidischer Faserverbundkeramik bzw. oxidische Faserverbundwerkstoffe" wird eine Matrix aus oxidischen keramischen Partikeln verstanden, die keramische, oxidische und/oder nichtoxidische Fasern, enthält.

Bevorzugte Oxide der Fasern und/oder der Matrix sind Oxide eines Elementes aus der Gruppe: Be, Mg, Ca, Sr, Ba, Seltene Erden, Th, U, Ti, Zr, Hf, V, Nb, Ta, Cr, Mo, W, Mn, Fe, Co, Ni, Zn, B, Al, Ga, Si, Ge, Sn, Li, Na, K, Rb, Cs, Re, Ru, Os, Ir, Pt, Rh, Pd, Cu, Ag, Au, Cd, in, Tl, Pb, P, As, Sb, Bi, S, Se, Te, sowie Mischungen dieser Oxide.

Die Mischungen sind sowohl als Material für die Faser als auch für die Matrix vorteilhaft geeignet. Faser und Matrix müssen generell nicht aus demselben Material sein.

Grundsätzlich sind nicht nur binäre, sondern auch tertiäre und höhere Mischungen geeignet und von Bedeutung. In einer Mischung können die einzelnen Bestandteile in gleicher molarer Menge vorkommen, vorteilhaft sind aber Mischungen mit stark unterschiedlicher Konzentration der einzelnen Bestandteile der Mischung, bis hin zu Dotierungen, bei denen eine Komponente in Konzentrationen von < 1 % vorkommt.

Besonders vorteilhaft sind folgende Mischungen: Binäre und ternäre Mischungen aus Aluminiumoxid, Zirkoniumoxid und Yttriumoxid (z.B. Zirkoniumoxidverstärktes Aluminiumoxid); Mischungen aus Siliziumcarbid und Aluminiumoxid; Mischungen aus Aluminiumoxid und Magnesiumoxid (MgO-Spinell); Mischungen aus Aluminiumoxid und Siliziumoxid (Mullit); Mischung aus Aluminium- und Magnesiumsilikate, Ternäre Mischung aus Aluminiumoxid, Siliziumoxid und Magnesiumoxid (Cordierit); Steatit (Magnesiumsilikat); Zrikonoxid-verstärktes Aluminiumoxid; Stabilisiertes Zirkoniumoxid ($ZrO_2$): Stabilisatoren in Form von Magnesiumoxid (MgO), Calciumoxid (CaO) oder Yttriumoxid ($Y_2O_3$), gegebenenfalls kommen auch Ceroxid ($CeO_2$), Scandiumoxid ($ScO_3$) oder Ytterbiumoxid ($YbO_3$) als Stabilisatoren zum Einsatz; ferner Aluminiumtitanat (stöchiometrische Mischung von Aluminiumoxid und Titanoxid); Siliziumnitrid und Aluminiumoxid (Siliziumaluminiumoxinitride SIALON).

Als zirkoniumoxidverstärktes Aluminiumoxid wird vorteilhaft $Al_2O_3$ mit 10 bis 20 Mol-% $ZrO_2$ eingesetzt. Zur Stabilisierung von $ZrO_2$ kann vorteilhaft 10 bis 20 Mol-% CaO, bevorzugt 16 Mol-%, 10 bis 20 Mol-% MgO, bevorzugt 16, oder 5 bis 10 Mol-% $Y_2O_3$, bevorzugt 8 Mol-% ("vollstabilisiertes Zirkonoxid") oder 1 bis 5 Mol-% $Y_2O_3$, bevorzugt 4 Mol-% ("teilstabilisiertes Zirkonoxid") verwendet werden. Als ternäre Mischung sind z.B. 80% $Al_2O_3$, 18,4% $ZrO_2$ und 1,6% $Y_2O_3$ vorteilhaft.

Neben den genannten Materialien (Mischungen und Einzelbestandteile) sind auch Fasern aus Basalt, Bornitrid, Wolframcarbid, Aluminiumnitrid, Titandioxid, Bariumtitanat, Bleizirkonattitanat und/oder Borcarbid in oxid-keramischer Matrix denkbar.

Als Fasern kommen Verstärkungsfasern in Frage, die in die Klassen oxidische, carbidische, nitridische Fasern bzw. C-Fasern und SiBCN-Fasern fallen. Insbesondere ist vorgesehen, dass die Fasern des keramischen Verbundwerkstoffes Aluminiumoxid-, Mullit-, Siliziumcarbid-, Zirkonoxid- und/oder Kohlenstoff-Fasern sind. Mullit besteht dabei aus Mischkristallen aus Aluminiumoxid und Siliziumoxid. Bevorzugt ist die Verwendung von Fasern aus Oxidkeramik ($Al_2O_3$, $SiO_2$, Mullit) oder aus Nichtoxidkeramik (C, SiC).

Es kommen vorteilhaft kriechbeständige Fasern zum Einsatz, d. h. Fasern, die im Kriechbereich - im Temperaturbereich bis 1400 °C - keine oder minimale zeitliche Zunahme der bleibenden Verformung, also der Kriechdehnung zeigen. Die Firma 3M gibt für die NEXTEL-Fasern folgende Grenztemperaturen an für die bleibende Dehnung von 1 % nach 1000 h unter Zugbelastung von 70 MPa an: NEXTEL 440: 875 °C, NEXTEL 550 und NEXTEL 610: 1010 °C, NEXTEL 720: 1120 °C an (Referenz: Nextel™ Ceramic Textiles Technical Notebook, 3M, 2004).

Die Fasern haben vorteilhaft einen Durchmesser zwischen 1 und 50 $\mu$m, bevorzugt zwischen 5 und 20 $\mu$m, besonders bevorzugt 8 und 15 $\mu$m. Sie sind vorteilhaft miteinander - üblicherweise mit Leinwand- oder Satinbindung - zu Textilbahnen verwoben, zu Schläuchen gestrickt oder als Faserbündel um eine Form gewickelt. Zur Herstellung des keramischen Verbundsystems werden die Faserbündel oder -gewebe beispielsweise mit einem Schlicker, der die Komponenten der späteren keramischen Matrix, vorteilhaft $Al_2O_3$ oder Mullit, enthält, infiltriert (Schmücker, M. (2007), Faserverstärkte oxidkeramische Werkstoffe, Materialwissenschaft und Werkstofftechnik, 38(9), 698-704). Durch Wärmebehandlung bei > 700 °C entsteht schließlich eine hochfeste Verbundstruktur aus den Keramikfasern und der keramischen Matrix mit einer Zugfestigkeit von vorteilhaft > 50 MPa, bevorzugt > 70 MPa, weiter bevorzugt > 100MPa, insbesondere > 120MPa.

Bevorzugter Weise wird als keramischer Faserverbundwerkstoff SiC/ $Al_2O_3$, SiC/Mullit, C/ $Al_2O_3$, C/Mullit, $Al_2O_3$/$Al_2O_3$, $Al_2O_3$/Mullit, Mullit/ $Al_2O_3$ und/oder Mullit/Mullit eingesetzt. Dabei bezeichnet das Material vor dem Schrägstrich den Fasertyp und das Material nach dem Schrägstrich den Matrixtyp. Als Matrixsystem für die keramische Faserverbundstruktur können auch Siloxane, Si- Precursoren und unterschiedlichste Oxide, wie zum Beispiel auch Zirkonoxid, eingesetzt werden. Bevorzugt enthält der keramische Faserverbundwerkstoff mindestens 99 Gew-% $Al_2O_3$ und/oder Mullit.

In der vorliegenden Erfindung werden bevorzugt Faserverbundwerkstoffe auf der Basis oxidkeramischer Fasern, beispielsweise 3M™ NEXTEL™ 312, NEXTEL™ 440, NEXTEL™ 550, NEXTEL™ 610, NEXTEL™ 720 oder die Typen MvM 1415N, MvM 1415N-2220, AvM 1415N, AvM 1415N-3000, FW12 und/oder FW30 des Herstellers Walter E.C. Pritzkow Spezialkeramik eingesetzt. Besonders bevorzugt ist die Verwendung von NEXTEL 610, NEXTEL 720, sowie die Typen AvM 1415N-3000 und/oder FW30. Ferner können vorteilhaft Fasern von Nitivy, Japan, verwendet werden.

Die Matrix weist vorteilhaft einen Füllgrad an Fasern (Volumenanteil der Fasern in der Verbundstruktur) von 20 bis 40 % auf, der gesamte Feststoffgehalt der Verbundstruktur beträgt vorteilhaft zwischen 50 und 80 %. Faserverbundkeramiken auf Basis oxidischer keramischer Fasern sind chemisch beständig in oxidierender und in reduzierender Gasatmosphäre (d. h. keine Gewichtsänderung nach Lagerung in Luft bei 1200 °C über 15h (Referenz: Nextel™ Ceramic Textiles Technical Notebook, 3M, 2004)) und thermisch beständig bis über 1300 °C. Faserverbundkeramiken besitzen ein quasi duktiles Verformungsverhalten. Damit sind sie temperaturwechselbeständig und besitzen ein quasi zähes Bruchverhalten. So kündigt sich das Versagen eines Bauteils an, bevor es bricht.

Der Faserverbundwerkstoff weist vorteilhaft eine Porosität von 20 % bis 50 % auf; sie ist demnach nicht gasdicht gemäß Definition in DIN 623-2. Der Faserverbundwerkstoff weist vorteilhaft eine Langeinsatztemperatur von bis zu 1500 °C, bevorzugt bis zu 1400 °C, besonders bevorzugt bis zu 1300 °C auf. Der Faserverbundwerkstoff weist vorteilhaft eine Festigkeit > 50 MPa, bevorzugt > 70 MPa, besonders bevorzugt > 100 MPa, insbesondere > 120 MPa auf. Der Faserverbundwerkstoff weist vorteilhaft eine Streckgrenze elastischer Verformung von 0,2 bis 1 % auf. Der Faserverbundwerkstoff weist vorteilhaft eine Temperaturwechselbeständigkeit gemäß DIN EN 993-11 auf. Der Faserverbundwerkstoff weist vorteilhaft einen thermischen Wärmeausdehnungskoeffizienten [ppm/K] von 4 bis 8,5 auf. Der Faserverbundwerkstoff weist vorteilhaft eine thermische Leitfähigkeit von 0,5 bis $5 \frac{W}{m \cdot K}$ auf.

Der keramische Faserverbundwerkstoff kann vorteilhaft durch CVI (Chemical Vapour Infiltration) - Verfahren, Pyrolyse, insbesondere LPI (Liquid Polymer Infiltration) -Verfahren oder durch chemische Reaktion wie LSI (Liquid Silicon Infiltration) -Verfahren hergestellt werden.

Das Gerüst ist vorteilhaft in Umfangsrichtung modular aufgebaut (siehe Figuren 2 bis 4). Das Gerüst ist vorteilhaft in der Höhe modular aufgebaut (siehe Figuren 5 und 6). Die Moduleinheiten in Umfangsrichtung werden als Segmente bezeichnet. Die Moduleinheiten in vertikaler Richtung werden als Lagen bezeichnet. Das modulare Gerüst weist mindestens zwei unterschiedliche Steg-Arten auf: Die erste Sorte der Stege definiert die Abgrenzung der Segmente, bevorzugt Auskleidungssegmente, in radialer Richtung. Diese Stege werden als Querstege bezeichnet. Die zweite Sorte der Stege definiert die Position der Segmente, bevorzugt der Auskleidungssegmente, in Umfangsrichtung. Diese Stege werden als Seitenstege bezeichnet.

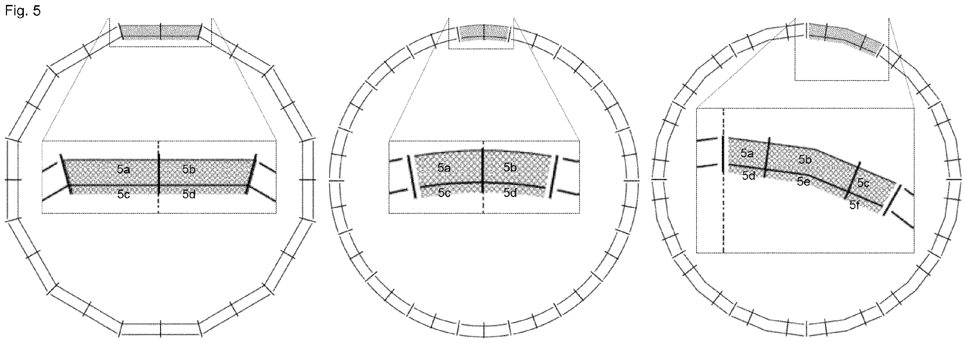

Vorteilhaft kann das Gerüst weitere stegförmige Elemente enthalten. Solche Elemente werden vorteilhaft in die Lücken zwischen zwei in Umfangsrichtung benachbarte Querstege gesteckt (siehe Figur 5). Diese Elemente werden auch Trennstege genannt. Alternativ kann der seitliche Abschluss der Segmente vorteilhaft durch zusätzliche Seitenstege erreicht werden.

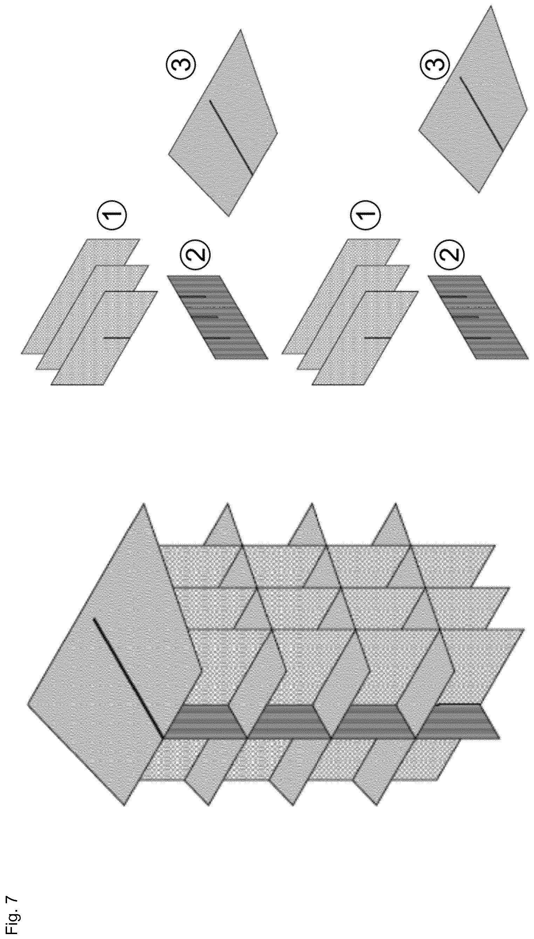

Weitere Element können vorteilhaft horizontal zwischen zwei übereinander angeordneten Lagen von Querstegen eingeschoben werden (siehe Figur 7). Diese Elemente werden als Flachstege bezeichnet. Die Flachstege können vorteilhaft Barrieren bilden gegen die Bildung von großräumigen Konvektionsballen in der porösen Struktur einer möglichen Auskleidung. Ferner erlauben die Flachstege vorteilhaft den lokal begrenzten Austausch von möglichen Steinen einer Auskleidung ohne das gesamte Gerüst zu demontieren.

Die Querstege sind vorteilhaft als ebene oder gewinkelte, rechteckige Platten oder als Zylinderschalen geformt ("ein Zylinder ist ein Körper, der von einer Zylinderfläche mit geschlossener Leitkurve und zwei parallelen Ebenen, den Grundflächen des Zylinders, begrenzt wird", Bronstein, Seite 251, Abb. 2.49).

Ferner können die Querstege als gewellte Platten geformt sein. Die Wellen können sinusförmig oder dreiecksförmig ausgebildet sein. Die Amplitude beträgt vorteilhaft 1 mm bis 100 mm, bevorzugt 2 mm bis 50 mm, insbesondere 3 mm bis 20 mm. Die Wellenlänge beträgt vorteilhaft 2 mm bis 500 mm, bevorzugt 5 mm bis 200 mm, insbesondere 10 mm bis 100 mm.

In der Draufsicht bilden die Querstege ein oder mehrere Vielecke, bevorzugt gleichmäßige Vielecke, oder ein oder mehrere konzentrische Ellipsen, bevorzugt ein oder mehrere konzentrische Kreise. Gewellte Querstege haben in der Draufsicht die Form einer periodischen Funktion oder einer Trochoiden. Die Seitenstege sind vorteilhaft sternförmig angeordneten (siehe Figuren 2 bis 5).

Ein Prisma, mit der Grundfläche Vieleck, weist vorteilhaft drei bis sechzig Querstege, bevorzugt vier bis vierzig Querstege, insbesondere sechs bis vierundzwanzig Querstege auf. Der Zylinder, mit der Grundfläche Ellipse, insbesondere der Kreis, weist vorteilhaft drei bis sechzig ellipsenförmige, bevorzugt kreisbogenförmige, Querstege, bevorzugt vier bis vierzig Querstege, insbesondere sechs bis vierundzwanzig Querstege auf. Der Durchmesser des Zylinders, bevorzugt mit der Grundfläche als der Ellipse, insbesondere als Kreises, bzw. die Diagonale des Vielecks, bevorzugt des gleichmäßigen Vielecks, liegt vorteilhaft zwischen 0,2 m und 20 m, bevorzugt zwischen 0,5 m und 15 m, insbesondere zwischen 1 m und 10 m.

Die Größe der Lücke zwischen zwei in Umfangsrichtung benachbarten Querstegen liegt vorteilhaft bei 0 bis 200 mm, bevorzugt bei 1 bis 100 mm, weiter bevorzugt bei 2 bis 50 mm, insbesondere bei 3 bis 20 mm.

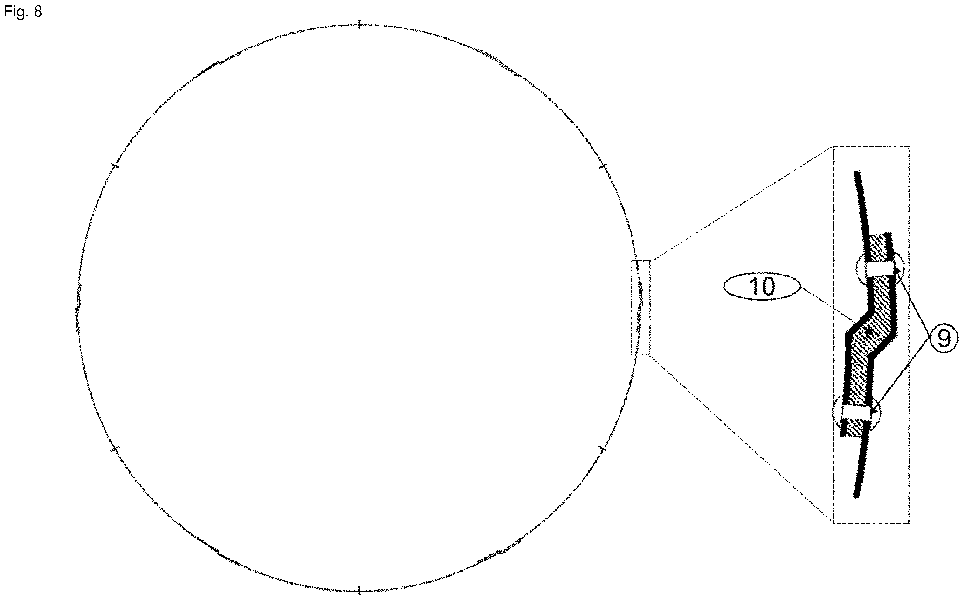

Optional können die Enden der in Umfangsrichtung benachbarten Querstege (siehe Figur 8) überlappen. Die Größe des Überlappens ist vorteilhaft 200 bis 20 mm. Die Überlappstöße sind vorteilhaft mit einem hochtemperaturfesten Kitt ausgefüllt und/oder mit Nieten, vorteilhaft aus keramischen Faserverbundwerkstoffen z.B. OCMC, verbunden.

Die Querstege, als Platte oder Zylinderform, weisen vorteilhaft eine Höhe von 100 mm bis 5 m, bevorzugt von 200 mm bis 3 m, insbesondere von 500 mm bis 2 m auf (Steghöhe). Die Querstege weisen vorteilhaft eine Länge von 100 mm bis 5 m, bevorzugt von 250 mm bis 3 m, insbesondere von 500 mm bis 2 m auf. Die Querstege weisen vorteilhaft eine Dicke von 0,2 mm bis 20 mm, bevorzugt von 0,5 mm bis 10 mm, insbesondere von 1 mm bis 5 mm auf.

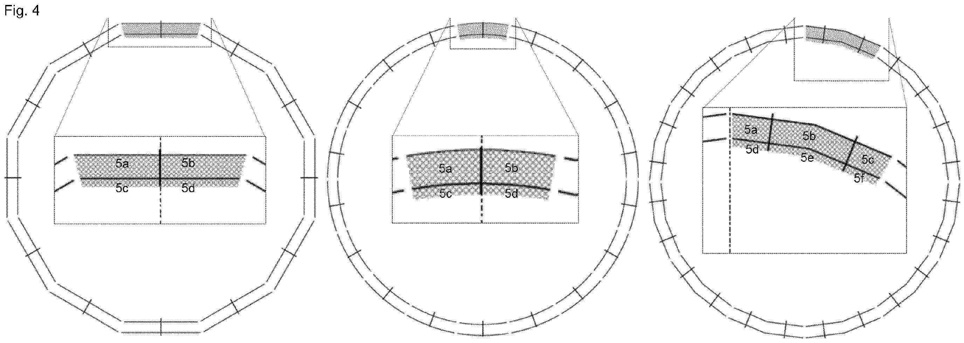

Vorteilhaft weisen die Querstege, die in der Draufsicht ein Vieleck, bevorzugt ein gleichmäßiges Vieleck, oder eine Ellipse, bevorzugt einen Kreis, bilden, die gleiche Höhe, Breite und Dicke auf. Vorteilhaft weist das modulare Gerüst mehrere aus Querstegen geformte übereinander angeordnete, als gleichmäßige Prismen oder als Zylinder geformte Lagen auf; vorteilhaft eine bis 100, bevorzugt zwei bis 50, insbesondere drei bis 30 Lagen (siehe Figur 4 und 5).

Die gesamte Höhe der übereinanderliegenden Elemente ist vorteilhaft 100 mm bis 50 m, bevorzugt 200 mm bis 20 m, insbesondere 500 mm bis 10 m.

In einem modularen Gerüst ist die Höhe der Querstege aller übereinander angeordneter Lagen vorteilhaft identisch (Steghöhe).

Vorteilhaft können parallele oder konzentrisch-ellipsenbogenförmige, bevorzugt parallele oder konzentrisch-kreisbogenförmige, Querstege verwendet werden, die in der Draufsicht als ineinander liegende Vielecke, bevorzugt gleichmäßige Vielecke, bzw. ineinander liegende Ellipsen, bevorzugt Kreise, angeordnet sind (siehe Figuren 2 bis 5). Vorteilhaft werden 2 bis 20 parallele oder konzentrisch-ellipsenbogenförmige, bevorzugt parallele oder konzentrisch-kreisbogenförmige, Querstege verwendet, bevorzugt 2 bis 5. Der Abstand zwischen den in radialer Richtung benachbarten Vielecken, bevorzugt gleichmäßigen Vielecken, oder den benachbarten Ellipsen, bevorzugt Kreisen, aus Querstegen liegt bevorzugt zwischen 10 mm und 1000 mm, bevorzugt zwischen 20 mm und 500 mm, besonders bevorzugt zwischen 40 mm und 250 mm. Vorteilhaft ist dieser Abstand bei allen in radialer Richtung benachbarten Querstegen gleich.

Die Seitenstege sind vorteilhaft als ebene oder gewellte, rechteckige Platten geformt.

Die Wellen können sinusförmig oder dreiecksförmig ausgebildet sein. Die Amplitude beträgt vorteilhaft 1 mm bis 100 mm, bevorzugt 2 mm bis 50 mm, insbesondere 3 mm bis 20 mm. Die Wellenlänge beträgt vorteilhaft 2 mm bis 500 mm, bevorzugt 5 mm bis 200 mm, insbesondere 10 mm bis 100 mm.

Die Seitenstege sind vorteilhaft orthogonal zu den Querstegen angeordnet.

Die Seitenstege weisen vorteilhaft eine Höhe von 100 mm bis 5 m, bevorzugt von 200 mm bis 3 m, insbesondere von 500 mm bis 2 m auf (Steghöhe). Die Seitenstege weisen vorteilhaft eine Breite von 50 mm bis 2 m, bevorzugt von 100 mm bis 1 m, insbesondere von 200 mm bis 500 mm auf. Die Seitenstege weisen vorteilhaft eine Dicke von 0,2 mm bis 20 mm, bevorzugt von 0,5 mm bis 10 mm, insbesondere von 1 mm bis 5 mm auf.

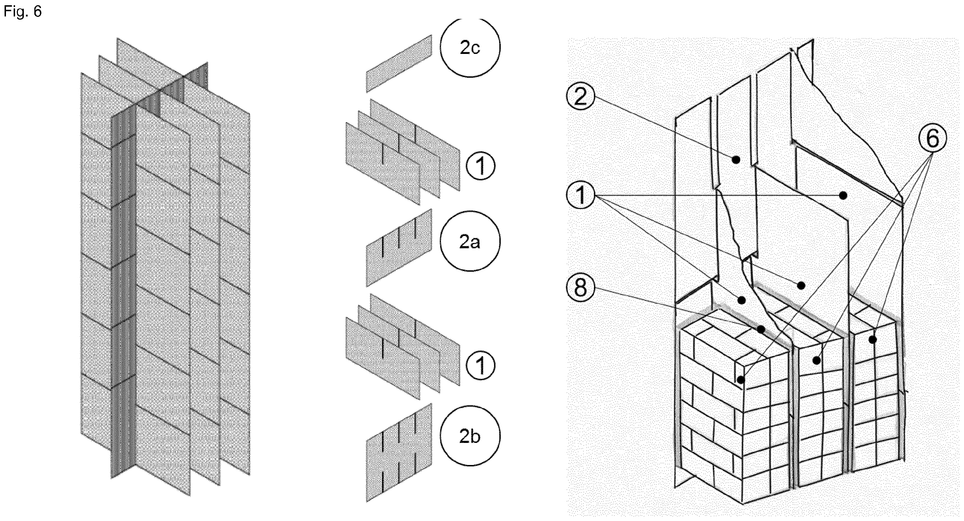

Im Fall von mehreren übereinander angeordneten Seitenstegen weisen die mittleren Seitenstege die gleiche Höhe, Breite und Dicke auf (siehe Figur 6).

Die Höhe der Seitenstege in den mittleren Lagen entspricht vorteilhaft 90% bis 110% der Steghöhe der Querstege, bevorzugt 95% bis 105% der Steghöhe der Querstege, besonders bevorzugt 98% bis 102% der Steghöhe der Querstege, insbesondere ist sie identisch zur Steghöhe der Querstege. Die Höhe der Stege in der untersten Lage und in der obersten Lage können von der Steghöhe in den mittleren Lagen abweichen. Vorteilhaft ist die Steghöhe in der untersten Lage um 10% bis 90%, bevorzugt um 20% bis 75%, besonders bevorzugt um 30% bis 60% niedriger oder höher als die Steghöhe der mittleren Stege. Vorteilhaft ist die Steghöhe in der obersten Lage um 10% bis 90%, bevorzugt um 20% bis 75%, besonders bevorzugt um 30% bis 60% höher oder niedriger als die Steghöhe der mittleren Stege. Wenn die Seitenstege in der untersten Lage niedriger sind als die mittleren Seitenstege, sind die Stege in der obersten Lage vorteilhaft im gleichen Verhältnis höher als die mittleren Seitenstege. Wenn die Seitenstege in der untersten Lage höher sind als die mittleren Seitenstege, sind die Stege in der obersten Lage vorteilhaft im gleichen Verhältnis niedriger als die mittleren Seitenstege.

Vorteilhaft schließen in der obersten Lage die Oberkanten der Seitenstege mit den Oberkanten der Querstege eben ab, d.h. der vertikale Versatz nach oben oder nach unten beträgt vorteilhaft weniger als 5%, bevorzugt veniger als 2% der Steghöhe.

Die Breite und Dicke der untersten Seitenstege und der obersten Seitenstege sind vorteilhaft identisch mit den mittleren Seitenstegen.

Alternativ schließen vorteilhaft in jeder Lage die Oberkanten der Querstege und der Seitenstege eben ab, d.h. der vertikale Versatz nach oben oder nach unten beträgt vorteilhaft weniger als 5%, bevorzugt weniger als 2% der Steghöhe. Dabei ist in jeder Lage die Höhe der Querstege und der Seitenstege vorteilhaft identisch. Diese Konfiguration eignet sich besonders für den Einsatz von Flachstegen.

Vorteilhaft unterscheidet sich in einem modularen Gerüst die Anzahl der übereinander angeordneten Seitenstege um weniger als 2 von der Anzahl der übereinander angeordneten Querstege, bevorzugt ist ihre Anzahl identisch.

Die optionalen Trennstege sind vorteilhaft als rechteckige Platten geformt.

Die Trennstege werden vorteilhaft zwischen den in Umfangsrichtung benachbarten Querstegen im Prisma, bevorzugt gleichmäßigen Prisma, bzw. in dem Zylinder, bevorzugt im kreisförmigen Zylinder, angeordnet (siehe Figur 4 und 5). Vorteilhaft werden die Trennstege in die Lücken gesteckt, die zwischen den in Umfangsrichtung benachbarten Querstegen im Prisma, bevorzugt gleichmäßigen Prisma, bzw. in dem Zylinder, bevorzugt im kreisförmigen Zylinder, entstehen.

Die Trennstege weisen vorteilhaft eine Höhe von 100 mm bis 5 m, bevorzugt von 200 mm bis 3 m, insbesondere von 500 mm bis 2 m auf. Die Trennstege weisen vorteilhaft eine Länge von 50 mm bis 2 m, bevorzugt von 100 mm bis 1 m, insbesondere von 200 mm bis 500 mm auf. Die Trennstege weisen vorteilhaft eine Dicke von 0,2 mm bis 20 mm, bevorzugt von 0,5 mm bis 10 mm, insbesondere von 1 mm bis 5 mm auf.

Das Verhältnis der Längen der Trennstege und der Seitenstege beträgt vorteilhaft von 0,9 bis 1,25. Das Verhältnis der Höhen der Trennstege und der Seitenstege beträgt vorteilhaft von 0,5 bis 50, bevorzugt von 0,75 bis 10, besonders bevorzugt von 0,9 bis 5. Vorteilhaft schließen in der obersten Lage die Oberkanten der Trennstege mit den Oberkanten der Querstege eben ab, d.h. der vertikale Versatz nach oben oder nach unten beträgt vorteilhaft weniger als 5%, bevorzugt weniger als 2% der Steghöhe. Vorteilhaft schließen in der obersten Lage die Oberkanten der Trennstege mit den Oberkanten der Seitenstege eben ab, d.h. der vertikale Versatz nach oben oder nach unten beträgt vorteilhaft weniger als 5%, bevorzugt weniger als 2% der Steghöhe.

Die optionalen Flachstege sind in Abhängigkeit von der Form der Querstege vorteilhaft als trapezförmige (bei rechteckigen Querstegen) oder ringsegmentförmige Platten (bei kreisbogenförmigen Querstegen) geformt.

Die Flachstege werden vorteilhaft horizontal zwischen zwei übereinander angeordnete Lagen von Querstegen eingesteckt (siehe Figur 7). Die Flachstege weisen vorteilhaft Aussparungen, bevorzugt Schlitze oder Öffnungen, insbesondere Schlitze, auf, so dass diese in die Seitenstege einsteckbar sind. Vorteilhaft liegen die Flachstege auf den Oberkanten der Querstege auf.

Trapezförmige Flachstege weisen vorteilhaft eine Basislänge von 100 mm bis 5 m, bevorzugt von 200 mm bis 3 m, insbesondere von 500 mm bis 2 m auf. Ferner weisen trapezförmige Flachstege vorteilhaft eine Höhe von 50 mm bis 2 m, bevorzugt von 100 mm bis 1 m, insbesondere von 200 mm bis 500 mm auf. Der Trapezwinkel, d.h. der spitze Innenwinkel zwischen der Basis und den Schenkeln des gleichschenkligen Trapezes, beträgt vorteilhaft 30 bis 88°, bevorzugt 45 bis 86°, insbesondere 60 bis 84°. Beispielhaft sind 87° für 60 Segmente vorteilhaft, 85,5° für 40 Segmente vorteilhaft und 82,5° für 24 Segmente vorteilhaft. Ferner weisen trapezförmige Flachstege vorteilhaft eine Dicke von 0,2 mm bis 20 mm, bevorzugt von 0,5 mm bis 10 mm, insbesondere von 1 mm bis 5 mm auf.

Ringsegmentförmige Flachstege weisen vorteilhaft einen Außenradius von 0,1 m bis 10 m, bevorzugt von 0,25 m bis 7,5 m, insbesondere von 0,5 m bis 5 m auf. Ferner weisen ringsegmentförmige Flachstege vorteilhaft eine Breite von 50 mm bis 2 m, bevorzugt von 100 mm bis 1 m, insbesondere von 200 mm bis 500 mm auf. Ferner weisen ringsegmentförmige Flachstege einen Winkelausschnitt von 6° bis 120°, bevorzugt von 9° bis 90°, besonders bevorzugt von 15° bis 60°. Ferner weisen trapezförmige Flachstege vorteilhaft eine Dicke von 0,2 mm bis 20 mm, bevorzugt von 0,5 mm bis 10 mm, insbesondere von 1 mm bis 5 mm auf.

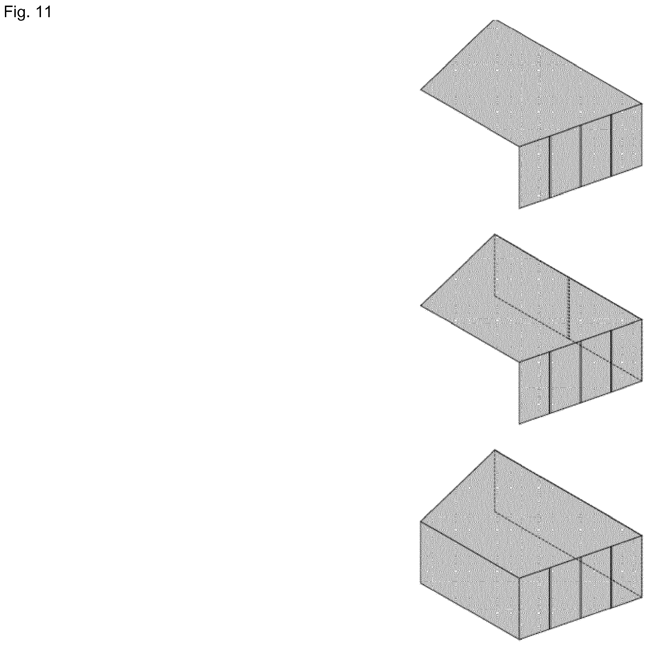

Die Flachstege und Trennstege können vorteilhaft ebenso in einem Element kombiniert werden (siehe Figur 11).

Das Gerüst besteht aus Stegen, die vorteilhaft über Aussparungen, bevorzugt Schlitze oder Öffnungen, insbesondere Schlitze, ineinander einsteckbar sind. Die Quer- und Seitenstege werden vorteilhaft kreuzweise ineinandergesteckt (siehe Figur 4 und 5).

Das modular aufgebaute Gerüst enthält pro Segment und Lage vorteilhaft einen bis zwanzig in radialer Richtung benachbarte Querstege, bevorzugt zwei bis zehn Querstege, besonders bevorzugt zwei bis fünf Querstege. Das modular aufgebaute Gerüst enthält pro Segment und Lage vorteilhaft ein bis zehn Seitenstege, bevorzugt ein bis fünf, besonders bevorzugt ein bis drei Seitenstege (siehe Figur 2).

Dabei sind die Seitenstege und die Querstege in der untersten und in den mittleren Lagen vorteilhaft in der Höhe gegeneinander versetzt. Der vertikale Versatz zwischen der Oberkante der Seitenstege und der Querstege in einer Lage beträgt von -90% bis +90% der Steghöhe, bevorzugt von -75% bis 75% der Steghöhe, besonders bevorzugt von -60% bis +60% der Steghöhe. Vorteilhaft schließen in der obersten Lage die Oberkanten der Trennstege mit den Oberkanten der Querstege eben ab, d.h. der vertikale Versatz nach oben oder nach unten beträgt vorteilhaft weniger als 5%, bevorzugt weniger als 2% der Steghöhe. Dadurch stützen sie sich vorteilhaft gegenseitig ab und bilden ein steifes, selbsttragendes Profil aus mehreren Segmenten. Die Querstege definieren die Abgrenzung der Segmente in radialer Richtung und die Seitenstege definieren die Abgrenzung der Segmente in Umfangsrichtung.

Vorteilhaft werden von 3 bis 60, bevorzugt von 4 bis 40, besonders bevorzugt von 6 bis 24 identischen Segmente pro Lage ausgebildet. Die Segmente sind vorteilhaft über der gesamten Höhe durch Trennstege voneinander getrennt (siehe Figur 5).

Die Querstege weisen vorteilhaft eine Aussparung, bevorzugt Schlitz oder Öffnung, insbesondere Schlitz, pro Seitensteg auf, der in derselben Lage desselben Segmentes angeordnet ist. Im Fall von einem einzigen Seitensteg, ist die Aussparung, bevorzugt Schlitz oder Öffnung, insbesondere Schlitz, in der Mitte des Querstegs angeordnet. Im Fall von mehreren Seitenstegen, sind die Aussparungen, bevorzugt Schlitze oder Öffnungen, insbesondere Schlitze, in den Querstegen symmetrisch zur Mitte angeordnet und der Abstand zwischen ihnen beträgt vorteilhaft 5 mm bis 2 m, bevorzugt von 10 mm bis 1 m, insbesondere von 20 mm bis 500 mm.

Die Seitenstege in den mittleren Lagen weisen vorteilhaft eine Aussparung, bevorzugt Schlitz oder Öffnung, insbesondere Schlitz, pro Quersteg auf, der vorteilhaft in derselben Lage desselben Segmentes angeordnet ist. Im Fall von einem einzigen Quersteg ist die Aussparung, bevorzugt Schlitz oder Öffnung, insbesondere Schlitze vorteilhaft 5 mm bis 2 m, bevorzugt von 10 mm bis 1 m, insbesondere von 20 mm bis 500 mm vom hinteren, der dem Reaktormantel zugewandten, Rand des Seitenstegs angeordnet. Im Fall von mehreren Querstegen ist der Abstand zwischen zwei benachbarten Aussparungen, bevorzugt Schlitze oder Öffnungen, insbesondere Schlitze, vorteilhaft 10 mm bis 2 m, bevorzugt von 20 mm bis 1 m, insbesondere von 30 mm bis 500 mm.

Vorteilhaft sind die Aussparungen, bevorzugt Schlitze oder Öffnungen, insbesondere Schlitze, aller Querstege nach unten offen. Die Länge der Aussparungen, bevorzugt Schlitze oder Öffnungen, insbesondere Schlitze, aller Querstegen eines Segmentes und der Seitenstege in den mittleren Lagen eines Segmentes entspricht vorteilhaft 10% bis 90% der Steghöhe, bevorzugt 25% bis 75% der Steghöhe, besonders bevorzugt 40% bis 60% der Steghöhe, insbesondere der halben Steghöhe.

Vorteilhaft sind die Aussparungen, bevorzugt Schlitze oder Öffnungen, insbesondere Schlitze, der Seitenstege in den mittleren Lagen nach unten offen. Die Länge der Aussparungen, bevorzugt Schlitze oder Öffnungen, insbesondere Schlitze, in den Seitenstegen in den mittleren Lagen entspricht vorteilhaft 90% bis 110% der Differenz zwischen der Steghöhe und der Länge der Aussparungen, bevorzugt Schlitze oder Öffnungen, insbesondere Schlitze, der Querstege, bevorzugt 95% bis 105% der Differenz zwischen der Steghöhe und der Länge der Aussparungen, bevorzugt Schlitze oder Öffnungen, insbesondere Schlitze, der Querstege, besonders bevorzugt 98% bis 102% der Differenz zwischen der Steghöhe und der Länge der Aussparungen, bevorzugt Schlitze oder Öffnungen, insbesondere Schlitze, der Querstege, insbesondere ist sie identisch zur Differenz zwischen der Steghöhe und der Länge der Aussparungen, bevorzugt Schlitze oder Öffnungen, insbesondere Schlitze, der Querstege.

Vorteilhaft weist der Seitensteg in der untersten Lage keine Aussparungen auf. Seine Höhe entspricht vorteilhaft 90% bis 110% der Höhe der Aussparung in den Querstegen, bevorzugt 95% bis 105% der Höhe der Aussparung in den Querstegen, besonders bevorzugt 98% bis 102% der Höhe der Aussparung in den Querstegen, insbesondere ist sie identisch zur Höhe der Aussparung in den Querstegen.

Der Seitensteg in der obersten Lage weist paarweise angeordnete Aussparungen, bevorzugt Schlitze oder Öffnungen, insbesondere Schlitze, an der Oberkante und an der Unterkante. Die Länge der Aussparungen, bevorzugt Schlitze oder Öffnungen, insbesondere Schlitze, entspricht der Länge der Aussparungen, bevorzugt Schlitze oder Öffnungen, insbesondere Schlitze, in den Seitenstegen in den mittleren Lagen.

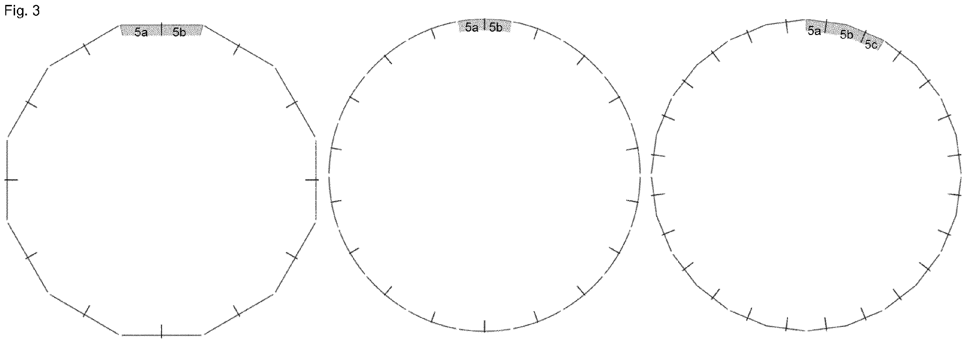

Unter einem Kasten wird der Bereich verstanden, den zwei in radialer Richtung benachbarte parallele oder konzentrisch-ellipsenbogenförmige, bevorzugt parallele oder konzentrisch kreisbogenförmige, Querstege und die entsprechenden Seitenstege, sowie die Lücke zwischen den in Umfangsrichtung benachbarten Querstegen bzw. der in diese Lücke vorteilhaft eingesteckte Trennsteg einschließen (schraffierte Flächenabschnitte 5a-b in Figur 2, schraffierte Flächenabschnitte 5a-d in Figur 3, schraffierte Flächenabschnitte 5a-f in Figuren 4 und 5). In der Draufsicht weisen die Kästen vorteilhaft einen vierkantigen Querschnitt oder einen ringsegmentförmigen Querschnitt auf (siehe Figur 2 - 5).

Jedes Segment weist vorteilhaft einen bis 50 Kästen auf, bevorzugt zwei bis 25 Kästen, insbesondere drei bis fünfzehn Kästen.

Dieses erfindungsgemäße modulare Gerüstsystem kann vorteilhaft als Gerüst-Stütze für Auskleidungen verwendet werden, insbesondere für Auskleidungen von chemischen Reaktoren für Hochtemperaturprozesse in Temperaturbereichen von 150°C bis 1900°C, bevorzugt von 400°C bis 1700°C, insbesondere von 600°C bis 1500°C.

Dieses erfindungsgemäße modulare Gerüstsystem kann ferner vorteilhaft als Stützstruktur für Katalysator verwendet werden, insbesondere Monolith-Katalysatoren (d.h. Katalysatorkörbe, die in axial oder radial durchströmten Festbettreaktoren eingesetzt werden).

Desweiteren kann das erfindungsgemäße modulare Gerüstsystem als elektrische Isolation, insbesondere in einem Reaktorinnenraum, verwendet werden.

Ferner kann das erfindungsgemäße modulare Gerüstsystem als Strahlungsschirm verwendet werden.

In der Draufsicht teilt das erfindungsgemäße modulare Gerüstsystem den Querschnitt des Reaktors, der von der Auskleidung eingenommen wird, in rechteckförmige, trapezförmige oder ringsegmentförmige Kastenprofile auf. Die Kästen sind vorteilhaft mit Feuerfeststeinen und/oder Katalysatoren, insbesondere Monolith-Katalysatoren, ausgefüllt. Alternativ bleiben die Kästen unbefüllt.

Der Querschnitt in der Draufsicht eines Kastens wird vorteilhaft mit einem bis 2000 Steine, bevorzugt mit zwei bis 500 Steinen, besonders bevorzugt mit drei bis 200 Steinen ausgefüllt, die nebeneinander und/oder hintereinander angeordnet sind. Die Summe der Steine innerhalb eines Kastens wird als Packung bezeichnet. Die Packung hat in der Draufsicht vorteilhaft einen rechteckförmigen, trapezförmigen oder ringsegmentförmigen Querschnitt, wobei die in radiale Richtung orientierten Seiten vorteilhaft parallel zueinander sind und die schmale Grundseite vorteilhaft nach innen gerichtet ist.

Die Feuerfeststeine haben vorteilhaft hexaedrische, vorzugsweise prismatische Formen. Vorteilhaft ist die obere und die untere Fläche sowie die vordere und hintere Fläche jeweils parallel zueinander. Vorteilhaft stehen die obere und untere Fläche senkrecht zu den anderen Flächen des Hexaeders.

Die Steine sind in radialer Richtung vorteilhaft schichtartig angeordnet. In radialer Richtung enthalten die Packungen vorteilhaft eine bis 40 Schichten, bevorzugt eine bis 20 Schichten, besonders bevorzugt eine bis 10 Schichten.

Die Steine sind in vertikaler Richtung vorteilhaft schichtartig angeordnet. In der Höhe enthalten die Packungen eine bis 1000, bevorzugt eine bis 500, besonders bevorzugt zwei bis 200, insbesondere drei bis 100 Schichten.

In Umfangsrichtung sind vorteilhaft 1 bis 200 Steine, bevorzugt 2 bis 150 Steine, insbesondere 3 bis 100 Steine nebeneinander in einem Kasten angeordnet.

Vorteilhaft werden die Fugen zwischen den Steinen einer Packung mit Mörtel oder Kleber ausgefüllt oder sie werden als Trockenfugen ausgeführt. Bevorzugt werden die Fugen zwischen den Steinen als Trockenfugen ausgeführt, d.h. es wird kein Mörtel oder Kleber für die Verbindung der Formsteine verwendet.

Vorteilhaft werden die Steine einer Packung als Binderschicht, als Läuferschicht, als Grenadierschicht, als Rollschicht, als Flachschicht, als Läuferverband, als Bindeverband, als Blockverband oder als Kreuzverband verlegt (siehe "Feuerfestbau" der Deutsche Gesellschaft Feuerfest- und Schornsteinbau e.V., Seite 76). Bevorzugt werden die Steine einer Packung als Läuferverband, als Binderverband, als Blockverband oder als Kreuzverband verlegt. Besonders bevorzugt werden die Steine einer Packung als Blockverband oder als Kreuzverband verlegt.

Auch eine Kombination der Verlegungsarten ist von Schicht zu Schicht in radialer Richtung möglich. Beispielsweise kann bei einer Packung mit zwei Schichten vorteilhaft in radialer Richtung die innere Schicht Kreuzverband und die äußere Schicht vorteilhaft als Grenadierschicht ausgeführt werden. Durch diese Kombination wird erreicht, dass die Fugen zwischen den Steinen einer Packung gegeneinander versetzt sind. Auf diese Weise werden Lücken, die sich möglicherweise zwischen benachbarten Steinen bilden, unterbrochen. Auf diese Weise können Fehlströme des gasförmigen Reaktionsmediums durch die Auskleidung wirksam reduziert werden.

Zwischen den Steinen und den Stegen bzw. zwischen den Steinen unterschiedlicher Packungen des modularen Gerüstsystems ist vorteilhaft eine Lücke. Die Lücke zwischen den Steinen und dem benachbarten Steg bzw. die Lücke zwischen den Steinen in Umfangsrichtung benachbarten Packungen beträgt vorteilhaft von 1 mm bis 50 mm, vorzugsweise von 1 mm bis 25 mm, besonders bevorzugt von 1 mm bis 10 mm. Diese Lücke bewirkt, dass sich die einzelnen Steine gegeneinander verschieben können. Durch diese Lücke wird ferner das Einsetzen der Steine beim Aufbau der Auskleidung vereinfacht. Ferner bieten die Lücken den erforderlichen Raum, damit die Packung sich ungehindert, d.h. spannungsfrei, thermisch ausdehnt.

Optional können die Lücken zwischen den Stegen und der Packung bzw. die Lücken zwischen den Steinen in Umfangsrichtung benachbarten Packungen durch Dämmmatten ausgefüllt werden, wie nachfolgende beschrieben.

Vorteilhaft ist der vertikale Versatz zwischen der Oberkante der Packung und der Oberkante des Gerüsts kleiner als 50 mm, bevorzugt kleiner als 20 mm, besonders bevorzugt kleiner als 10 mm, insbesondere schließt die obere Kante der Packung eben mit der Oberkante des Gerüsts ab, d.h. der vertikale Versatz nach oben oder nach unten beträgt vorteilhaft weniger als 5%, bevorzugt weniger als 2% der Höhe des Querstegs. Dieses kann beispielsweise durch geeigneten Zuschnitt der Steine in einer Lage der Packung erreicht werden.

Dabei gibt es in der Regel zwischen den Lagenfugen der Packung und den Fugen zwischen übereinander angeordneten Querstegen der unteren und der mittleren Lagen eines Gerüsts einen vertikalen Versatz. Der vertikale Versatz zwischen zwei unmittelbar übereinander angeordneten Querstegen und der nächsten Lagenfuge der Packung beträgt vorteilhaft 0% bis 50% einer Steinhöhe, bevorzugt 20% bis 50% einer Steinhöhe.

Im Spezialfall, dass Flachstege eingesetzt werden, liegt die Fuge zwischen zwei übereinander angeordneten Querstegen auf der Höhe einer Lagerfuge zwischen zwei übereinander angeordneten Reihen von Steinen. Der vertikale Versatz zwischen der Fuge zwischen zwei übereinander angeordneten Querstegen und der nächsten Lagerfuge zwischen zwei übereinander angeordneten Reihen von Steinen ist vorteilhaft kleiner als 10 mm, bevorzugt kleiner als 5 mm, besonders bevorzugt kleiner als 3 mm.

Die Seiten der Steine können vorteilhaft eben sein. Alternativ können die Seiten geeignet geformte Fortsätze (Spundung / Feder) und Aussparungen (Nut) tragen und so formschlüssig durch eine Nut-Feder-Verbindung miteinander verbunden sein (siehe DIN 1057).

Die innere Schicht der Packung hat vorteilhaft auf der Vorderseite Kontakt zur Reaktionsstrecke und ist vorteilhaft seitlich und auf der Rückseite vom erfindungsgemäßen Gerüst begrenzt.

Unter "Feuerfeststeine" werden in der vorliegenden Erfindung keramische Erzeugnisse und Werkstoffe mit einer Einsatztemperatur von über 600°C verstanden. Laut Definition (DIN 51 060) sind nur Werkstoffe mit einem Kegelfallpunkt größer SK 17 (= ISO 150) - was in etwa 1500 °C entspricht - als feuerfest zu bezeichnen. Diese Grenztemperatur entspricht ungefähr dem Schmelzpunkt von Eisen und ist zoll- und bergbaurechtlich von Belang.

Die Steine auf der Innenseite der Ausmauerung weisen vorteilhaft folgendes Eigenschaftsprofil auf: (i) gute Wärmeisolation im Temperaturbereich 1000°C bis 1700°C, (ii) hohe Festigkeit, (iii) Abrasionsbeständigkeit, (iv) geringe offene Porosität, (v) Temperaturwechselbeständigkeit, (vi) elektrische Isolation. Eine gute Wärmeisolation ist gegeben bei einer Wärmeleitfähigkeit kleiner als 2 W/m/K, bevorzugt kleiner 1 W/m/K. Eine hohe Festigkeit ist gegeben bei einer Kaltdruckfestigkeit größer als 5 MPa, bevorzugt größer als 10 MPa. Eine hohe Abrasionsbeständigkeit korreliert mit der Härte des Materials. Eine geringe offene Porosität ist in keramischen Schäumen gegeben, wenn der Anteil geschlossener Poren größer als 1%, bevorzugt größer als 5%, besonders bevorzugt größer als 10% beträgt. Eine hohe Temperaturwechselbeständigkeit ist gegeben, wenn das Material den Test gemäß DIN V ENV 820-3 besteht. Eine gute elektrische Isolation ist gegeben wenn der spezifische elektrische Widerstand größer als 109 Ωm, bevorzugt größer als 1011 Ωm ist.

Die Eigenschaften der Steine, insbesondere Zusammensetzung, Festigkeit, Form und Maße werden in DIN 1057 (Baustoffe für freistehende Schornsteine), 1081 (Keramische feuerfeste Werkstoffe: Feuerfeste Rechtecksteine), 1082 (Keramische feuerfeste Werkstoffe: Feuerfeste Wölbsteine) angegeben.

Feuerfeststeine sind vorteilhaft Formsteine aus Feuerfestwerkstoffen. Der Werkstoff der Feuerfeststeine ist vorteilhaft abhängig von den Prozesstemperaturen und Prozessbedingungen zu wählen. Ferner ist die Werkstoffwahl vorteilhaft abhängig von der radialen Position (Schicht) innerhalb der Auskleidung zu wählen.

Bevorzugt ist der Werkstoff der inneren, medienberührenden Schicht aus keramischen Schäumen oder Feuerfestwerkstoffen gemäß der Klassifizierung DIN EN 12475, insbesondere Alumina-Silika-Erzeugnisse, beispielsweise Schamott, Korund, Mullit, Cordierit oder basische Erzeugnisse, beispielsweise Magnesia, Magnesia-Chromoxid, Magnesia-Spinell, Magnesia-Zirkon oder kohlenstoffgebundene basische Steine, insbesondere Korund, Mullit, Cordierit. Keramische Schäume sind beispielsweise in DE 10 2015 202 277 und WO 07/22750 beschrieben. Besonders geeignet sind geschlossen-porige, aufgeschäumte keramische Werkstoffe, die unter dem Handelsnamen Halfoam Alumina™ geführt werden.

Ganz besonders bevorzugt bestehen die Formsteine der inneren Schicht aus dem aufgeschäumten keramischen Werkstoff, der unter dem Handelsnamen Halfoam Alumina™ geführt wird.

Ferner betrifft die vorliegende Erfindung Formsteine beinhaltend keramische Schäume, insbesondere geschlossen-porige Schäume. Vorteilhaft beinhalten die erfindungsgemäßen Formsteine keramische Schäume aus Alumina-Silika-Erzeugnisse, beispielsweise Schamott, Korund, Mullit, Cordierit oder basische Erzeugnisse, beispielsweise Magnesia, Magnesia-Chromoxid, Magnesia-Spinell, Magnesia-Zirkon oder kohlenstoffgebundene basische Steine, insbesondere Korund, Mullit, Cordierit.

Ferner betrifft die vorliegende Erfindung einen Steinverbund beinhaltend mehrere in radialer Richtung hintereinander angeordnete Schichten von Stein-Packungen.

Die Materialien einer zweiten Schicht von innen weisen vorteilhaft folgendes Eigenschaftsprofil auf: Temperaturbeständigkeit oberhalb 1500°C, Wärmeleitfähigkeit kleiner als 1 W/m/K, bevorzugt kleiner 0,5 W/m/K eine Kaltdruckfestigkeit größer als 1 MPa, bevorzugt größer als 2 MPa. Dieses Eigenschaftsprofil weisen Schäume sowie gegossene oder extrudierte Feuerleichtsteine auf. Beispielhaft werden in dieser Schicht Handelsprodukte wie Halfoam, Carath FL®, PROMATON® eingesetzt.

Die Materialien einer dritten Schicht von innen weisen vorteilhaft folgendes Eigenschaftsprofil auf: Temperaturbeständigkeit oberhalb 1200°C, Wärmeleitfähigkeit kleiner als 0,5 W/m/K, bevorzugt kleiner 0,2 W/m/K eine Kaltdruckfestigkeit größer als 0,5 MPa, bevorzugt größer als 1 MPa. Dieses Eigenschaftsprofil weisen vorteilhaft vakuumgeformte Faserplatten auf. Beispielhaft werden in dieser Schicht Handelsprodukte wie PROMATON® oder ALTRA® eingesetzt.

Die Materialien einer vierten Schicht von innen weisen vorteilhaft folgendes Eigenschaftsprofil auf: Temperaturbeständigkeit oberhalb 1000°C, Wärmeleitfähigkeit kleiner als 0,2 W/m/K, bevorzugt kleiner 0,05 W/m/K eine Kaltdruckfestigkeit größer als 0,1 MPa, bevorzugt größer als 0,2 MPa. Dieses Eigenschaftsprofil weisen vorteilhaft vakuumgeformte Faserplatten oder Platten aus mikroporöser pyrogenes Siliciumdioxid auf. Beispielsweise werden in dieser Schicht Handelsprodukte wie ALTRA® oder MICROTHERM® eingesetzt.

Die vorliegenden Erfindung betrifft ferner einen Steinverbund beinhaltend mehrere in radialer Richtung hintereinander angeordnete Stein-Packungen aus (i) aufgeschäumter Keramik und (ii) gesinterter gegossener oder extrudierter Keramik oder (i) aufgeschäumter Keramik, (ii) gesinterter gegossener oder extrudierter Keramik und (iii) verpressten keramischen Fasern oder (i) aufgeschäumter Keramik, (ii) gesinterter gegossener oder extrudierter Keramik, (iii) verpressten keramischen Fasern und (iv) vakuumgeformten Faserplatten oder Platten beinhaltend mikroporöser pyrogenes Siliciumdioxid

Die Oberfläche der aus Formsteinen, bevorzugt keramische Schäume, bestehende innere Schicht der Auskleidung kann unbehandelt oder beschichtet sein. Die Beschichtung dient vorteilhaft zur Versiegelung der Oberfläche der Auskleidung und als Abrasionsschutz. Die Beschichtung, z.B. Schutzschicht, wird vorteilhaft auf die Stirnseite und / oder auf die Rückseite und oder auf die Oberseite und / oder auf die Unterseite und / oder auf die linke und rechte Flanke, bevorzugt auf die Stirnseite und / oder auf die Rückseite und oder auf die Oberseite und / oder auf die Unterseite, besonders bevorzugt auf die Stirnseite und / oder auf die Rückseite, insbesondere auf die Stirnseite aufgetragen. Als Stirnseite wird die dem Reaktorinneren zugewandte Fläche des Formsteins bezeichnet. Die Schicht besteht vorteilhaft aus refraktären Keramiken, beispielsweise $ZrO_2$, $YO_2$, $Si_3N_4$, $Al_2O_3$, bevorzugt aus $Al_2O_3$. Die Dicke der Schutzschicht beträgt vorteilhaft zwischen 100 $\mu$m und 2 mm, bevorzugt zwischen 200 $\mu$m und 1 mm. Die Porosität (der Leerraumanteil) der Beschichtung ist vorteilhaft < 50%, bevorzugt < 25%, besonders bevorzugt < 10%, insbesondere < 5%. Die Beschichtung kann durch dem Fachmann bekannte Beschichtungsmethoden auf die Formsteine aufgetragen werden, z.B. durch Streichverfahren, Tauchbeschichtung, Flammspritzen, Plasmaspritzen.

Vorteilhaft besteht die Beschichtung aus einer mehrlagige Struktur, beispielsweise aus einer dünnen Lage unporöser und einer oder mehreren dickeren Lagen poröser Keramik.

Beispiele geeigneter Beschichtungsmaterialien sind Aremco Coatings (Streichmassen): PP-634-AL, 634-SIC, 634-YO, 634-ZO, Oerlikon Metco (Flammspritzen und Plasmaspritzen), LWK PlasmaCeramic (Plasmabeschichtung), Polytec Cotronics (Streichmassen, Gussmassen).

Die Formsteine weisen vorteilhaft eine dem Fachmann bekannte Maße gemäß DIN 1081 (1988) für Rechtecksteine und/oder DIN 1082 (1988) für Wölbsteine bzw. keilförmige Steine auf. Optional können die Steine auf individuelle Maße zugeschnitten werden.

In vertikaler Richtung können in unterschiedlichen Lagen einer Schicht die Feuerfeststeine unterschiedlich hoch sein. Das kann beispielsweise dadurch bewerkstelligt werden, dass die Formsteine abwechselnd als Grenadierschicht und als Läuferschicht verlegt werden. Dadurch können (i) in Bereichen mit geringen axialen Temperaturgradienten überflüssige Fugen oder (ii) in Bereichen mit großen axialen Temperaturgradienten hohe mechanische Spannungen im Inneren einzelner Steine vermieden werden.

Die Kanten der Packung aus Feuerfeststeinen sind vorteilhaft parallel zu den angrenzenden Stegen bzw. zu den Lücken zwischen benachbarten Stegen. Die Lücke zwischen den Steinen und dem benachbarten Steg bzw. die Lücke zwischen den Steinen in Umfangsrichtung benachbarten Packungen beträgt vorteilhaft von 1 mm bis 50 mm, vorzugsweise von 1 mm bis 25 mm, besonders bevorzugt von 1 mm bis 10 mm. Diese Lücken werden vorteilhaft zumindest teilweise mit Dämmmatten aus mineralischen Fasern ausgefüllt.

Die Dämmmatten sind optional an den flächigen Seiten der Stege befestigt. Während der Montage sind die Dämmmatten vorteilhaft vakuumdicht in Folien eingeschweißt und evakuiert. Die so präparierten Matten werden vorteilhaft auf die Querstege und/oder die Seitenstege und/oder die Trennstege und/oder die Querstege, bevorzugt auf die Querstege und/oder die Seitenstege, besonders bevorzugt auf die Querstege aufgeklebt. Nach der Montage werden die Folien vorteilhaft aufgestochen. Dadurch expandieren die Matten und verspannen die Steine. Diese Prozedur ist beispielsweise in WO 2014/125024 beschrieben.

Materialien mit folgenden Handelsnamen sind für die beschriebenen Dämmmatten geeignet: ALSIFLEX-1600, ALSIFLEX-1600 Paprier, PROMAFELT-1600, SILCAFLEX 160, THERMOFRAX blanket (flexible Matten), THERMOFRAX board (Vakuumformteile) oder THERMOFRAX felt/paper (Kermikpapiere und Filze).

Vorteilhaft wird das erfindungsgemäße Gerüst durch ein Fundament, z.B. eine Grundplatte, gestützt. Die Grundplatte dient vorteilhaft zur Verankerung des modularen Gerüsts und zur Aufnahme des Gewichts der Feuerfestpackung. Die Grundplatte kann alternativ einteilig oder segmentiert sein. Bevorzugt ist die Grundplatte segmentiert und jedes Element trägt vorteilhaft ein Segment des erfindungsgemäßen Gerüstsystems.

Alternativ zum Fundament kann das erfindungsgemäße Gerüst an der Decke fixiert sein.

Die Grundplatte ist vorteilhaft lose oder fest auf der unteren Haube gelagert. Bevorzugt ist die Grundplatte mit dem Flansch der unteren Haube durch eine lösbare Verbindung verbunden. Besonders bevorzugt ist die Grundplatte mit dem Flansch der unteren Haube verschraubt.

Vorteilhaft ist die Grundplatte ringförmig. Vorteilhaft sind die obere und untere Seite der Grundplatte plan und parallel zueinander. Die Dicke der Grundplatte beträgt 1 mm bis 500 mm, bevorzugt 2 mm bis 300 mm, besonders bevorzugt 3 mm bis 200 mm.

Die Breite des Rings beträgt 50 mm bis 2 m, bevorzugt von 100 mm bis 1 m, insbesondere von 200 mm bis 500 mm.

Der äußere Rand der Grundplatte ragt in der Draufsicht vorteilhaft über die äußeren Querstege des OCMC-Gerüsts hinaus. Der Überstand des äußeren Randes der Grundplatte gegenüber dem äußeren Quersteg beträgt vorteilhaft 0 mm bis 200 mm, bevorzugt 5 mm bis 100 mm, besonders bevorzugt um 10 mm bis 50 mm. Der innere Rand der Grundplatte wird in der Draufsicht vorteilhaft von der inneren Schicht der Auskleidung überdeckt. Der Überstand des Innenrands der Auskleidung gegenüber dem Innenrand der Grundplatte beträgt vorteilhaft 0 mm bis 100 mm, bevorzugt 0 mm bis 50 mm, besonders bevorzugt 0 mm bis 20 mm.

Die Grundplatte weist vorteilhaft auf der Oberseite Nuten auf. Die Nuten dienen vorteilhaft als Lager für die Abstützung und Führung der Quer-, Seiten- und ggf. Trennstege der untersten Lage des Gerüsts. Die Anordnung der Nuten entspricht vorteilhaft dem Muster der Stege in der Draufsicht des Gerüsts.

Die Nuten sind vorteilhaft 1 mm bis 500 mm, bevorzugt 2 mm bis 300 mm, besonders bevorzugt 3 mm bis 200 mm tief. Die Nuten sind vorteilhaft 0,2 mm bis 20 mm, bevorzugt von 0,5 mm bis 10 mm, insbesondere von 1 mm bis 5 mm breit. Die Nuten sind vorteilhaft 1% bis 100%, bevorzugt 2% bis 50%, besonders bevorzugt 5% bis 20% breiter als die Dicke der eingesetzten Stege.

Vorteilhaft sind die Seitenstege und die Querstege der untersten Lage des Gerüsts fest mit der Grundplatte verbunden. Die Verbindung kann beispielsweise kraftschlüssig durch Verschraubung, formschlüssig durch Passstift oder stoffschlüssig durch Verklebung hergestellt werden. Vorteilhaft besteht die Grundplatte aus Metall, aus Kunststoff und/oder aus Keramik, bevorzugt aus Metall, besonders bevorzugt aus Stahl.

Optional ist die Oberfläche der Grundplatte elektrisch leitend oder elektrisch isolierend. Im Fall einer metallischen Grundplatte besteht die elektrisch isolierende Oberflächenschicht vorteilhaft aus Email, aus Keramik und/oder aus Kunststoff. Bevorzugt ist die Oberfläche der Grundplatte bereichsweise elektrisch isolierend. Besonders bevorzugt sind die Oberseite und der äußere Umfang der Grundplatte elektrisch isolierend.

Die Grundplatte trägt vorteilhaft Befestigungselemente für eine Hebevorrichtung, womit die Auskleidung als Ganzes oder segmentweise aus dem Reaktor herausgehoben und montiert werden kann.

Es kann vorteilhaft eine sogenannte multifunktionale Grundplatte verwendet werden. Diese Grundplatte hat optional ein oder mehrere der folgenden Merkmale: (i) Die Grundplatte ist vorteilhaft durchgängig bis zur Reaktormitte. Im Bereich der Reaktionsstrecke besitzt die Grundplatte vorteilhaft Öffnungen für die Durchströmung von Gas und Feststoff. (ii) Die Grundplatte ist vorteilhaft als Flansch der unteren Haube gestaltet. (iii) Die Grundplatte trägt vorteilhaft die untere Elektrode im elektrisch beheizten Wanderbett- oder Festbettreaktor.

Vorteilhaft ist eine Kombination mit einer thermischen Isolation auf der Innenseite des Reaktormantels; beispielsweise durch in Metallschalen gekapselte Isolationsplatten. Die Isolationsplatten sind vorteilhaft porös mit einer Gesamtporosität größer als 45% und kleiner als 99%, bevorzugt größer als 60% und kleiner al 99%, besonders bevorzugt größer als 70% und kleiner als 99%. Vorteilhaft enthalten die Isolationsplatten Calciumsilicat, Vermiculit, Steinwolle, Glaswolle oder pyrogenes Siliciumdioxid. Die Isolationsplatten sind vorteilhaft eingefasst in geschlossenen Metallschalen. Die Metallschalen bestehen vorteilhaft aus Blechen, die durch Falzen, Schweißen oder Löten zu einer geschlossenen Schale sind. Die Schalen sind vorteilhaft auf ihrer Rückseite mit Befestigungselementen, vorteilhaft Haken und/oder Ösen versehen. Über diese Befestigungselemente sind sie vorteilhaft an den passenden Halterungen an dem drucktragenden Reaktormantel aufgehängt.

Ferner betrifft die Erfindung eine Vorrichtung, bevorzugt einen Reaktor, der das erfindungsgemäße modulare Gerüstsystem und einen drucktragenden Reaktormantel aufweist, bevorzugt das erfindungsgemäße modulare Gerüstsystem, eine Auskleidung und einen drucktragenden Reaktormantel.

Der Reaktorquerschnitt beträgt vorteilhaft von 0,005 m$^2$ bis 200 m$^2$, bevorzugt von 0,05 m$^2$ bis 100 m$^2$, besonders bevorzugt von 0,2 m$^2$ bis 50 m$^2$, insbesondere von 1 m$^2$ bis 20 m$^2$. Die Höhe des Reaktormantels beträgt vorteilhaft zwischen 0,1 m und 100 m, vorzugsweise zwischen 0,2 m und 50 m, besonders bevorzugt zwischen 0,5 m und 20 m, insbesondere zwischen 1 m und 10 m. Das Verhältnis der Höhe zum äquivalenten Durchmesser des Reaktormantels beträgt vorteilhaft von 0,01 bis 100, bevorzugt von 0,05 bis 20, besonders bevorzugt von 0,1 bis 10, ganz besonders bevorzugt von 0,2 bis 5. Die Wandstärke des Reaktormantels beträgt vorteilhaft 1 mm bis 300 mm, bevorzugt 5 mm bis 200 mm, besonders bevorzugt 10 mm bis 100 mm.

Bevorzugte Werkstoffe für den Reaktormantel sind Stahllegierungen, beispielsweise mit der Werkstoffnummer 1.4541, 1.4571.

Vorteilhaft befindet sich zwischen dem modularen Gerüstsystem und dem drucktragenden Reaktormantel ein durchgängiger Spalt. Die Spaltweite beträgt vorteilhaft 0 mm bis 100 mm, bevorzugt 2 mm bis 50 mm, besonders bevorzugt 5 mm bis 50 mm.

Der Spalt zwischen dem modularen Gerüstsystem und dem drucktragenden Mantel kann optional mit einer losen Partikelschüttung gefüllt sein. Die Partikeln können keramisch oder metallisch sein. Die Partikeln können regelmäßig beispielsweise sphärisch, zylindrisch, prismatisch oder unregelmäßig geformt sein. Die Partikeln können massiv, porös oder hohl sein. Die Partikeln können gleich- oder unterschiedlich groß sein. Vorteilhaft besitzen die Partikeln der Schüttung einen äquivalenten Durchmesser von 0,05 mm bis 100 mm, bevorzugt von 0,1 mm bis 50 mm, besonders bevorzugt von 0,5 mm bis 10 mm. Der äquivalente Durchmesser eines Partikels ist der Durchmesser einer zum Partikel volumengleichen Kugel.

Der Spalt zwischen dem modularen Gerüstsystem und dem drucktragenden Mantel kann optional durch einen gerichteten Gasstrom gespült werden. Als Spülgas wird vorteilhaft $CO_2$, $H_2O$, $N_2$, $H_2$, $N_2$, Magerluft (mit $N_2$ verdünnte Luft) und/oder Ar verwendet. Der Spülgasstrom wird vorteilhaft ringförmig über die obere Haube eingeleitet und über die Grundplatte der Auskleidung abgezogen. Alternativ wird der Spülgasstrom ringförmig über die Grundplatte der Auskleidung eingeleitet und über die Haube abgezogen. Der Spülgasstrom bildet vorteilhaft einen Gasvorhang, der die Reaktionsstrecke vom drucktragenden Reaktormantel trennt. Dadurch kann die Bildung von Ablagerungen an der Innenseite des drucktragenden Reaktormantels verhindert werden; zusätzlich kann der drucktragende Mantel gekühlt werden.

Optional kann das modulare Gerüstsystem gegen die Seitenwand des drucktragenden Mantels gestützt sein. Die Stützen können aus OCMC, aus monolithischer Keramik, aus einem Textil aus Keramikfasern, aus Metall oder aus einer Kombination dieser Materialien bestehen. Sie können lose zwischen dem Gerüst und der Seitenwand des drucktragenden Mantels geführt, mit dem OCMC-Gerüst oder mit dem drucktragenden Mantel der Reaktorwand fest verbunden sein. Die Verbindung kann stoffschlüssig oder formschlüssig sein. Bevorzugt sind die Stützen lose zwischen dem modularen Gerüstsystem und der Seitenwand des drucktragenden Mantels geführt.

In einem Reaktor mit großen axialen Temperaturgradienten kann es vorteilhaft sein, das modulare Gerüstsystem nur in den Bereich des Reaktors zu positionieren, wo seine Funktion als hochtemperaturbeständige, thermisch und elektrisch isolierende Abgrenzung des Reaktionsvolumens erforderlich ist. Die Randbereiche des drucktragenden Mantels können in diesem Fall vorteilhaft unisoliert bleiben.

Vorteilhaft wird der Reaktor elektrisch beheizt (siehe PCT/EP2019/051466).

Vorteilhaft weist die erfindungsgemäße Vorrichtung einen oberen, mittleren und unteren Vorrichtungsabschnitt auf, wobei im mittleren Abschnitt mindestens ein vertikal angeordnetes Elektrodenpaar eingebaut/angeordnet ist und alle Elektroden vorteilhaft in einer elektrisch-leitenden Feststoff-Packung angeordnet/eingebettet sind. Vorteilhaft sind die oberen und unteren Vorrichtungsabschnitte als Hauben geformt und weisen eine spezifische Leitfähigkeit von $10^5$ S/m bis $10^8$ S/m auf. Der mittlere Vorrichtungsabschnitt ist vorteilhaft gegen die Feststoff-Packung elektrisch isoliert. Vorteilhaft ist ebenso der obere und untere Vorrichtungsabschnitt gegen den mittleren Vorrichtungsabschnitt elektrisch isoliert. Vorteilhaft ist die obere Elektrode über den oberen Vorrichtungsabschnitt und die untere Elektrode über den unteren Vorrichtungsabschnitt angeschlossen oder die Elektroden sind jeweils über ein oder mehrere an diesen Abschnitten elektrisch kontaktierte Verbindungselemente angeschlossen. Vorteilhaft beträgt das Verhältnis der Querschnittsfläche der oberen und/oder, bevorzugt und, unteren Elektrode zur Querschnittsfläche des jeweiligen stromleitenden Verbindungselements oder, ohne Verwendung eines Verbindungselements, das Verhältnis der Querschnittsfläche der oberen und/oder, bevorzugt und, unteren Elektrode zur Querschnittsfläche des jeweiligen stromleitenden Vorrichtungsabschnitts 0,1 bis 10, bevorzugt 0,3 bis 3, insbesondere 0,5 bis 2.

Bevorzugt werden folgende Hochtemperaturreaktionen in der erfindungsgemäßen Vorrichtung, insbesondere dem Reaktor, durchgeführt:

- die Herstellung von Synthesegas durch Reformierung von Kohlenwasserstoffen mit Wasserdampf und / oder Kohlenstoffdioxid, Koppelproduktion von Wasserstoff und Pyrolyse-Kohlenstoff durch die Pyrolyse von Kohlenwasserstoffen. Geeignete Trägermaterialien sind insbesondere kohlenstoffhaltige Granulate, Siliciumcarbid-haltige Granulate, nickelhaltige metallische Granulate.
- Herstellung von Blausäure aus Methan und Ammoniak oder aus Propan und Ammoniak. Geeignete Trägermaterialien sind insbesondere kohlenstoffhaltige Granulate.
- Herstellung von Olefinen durch Wasserdampfspaltung von Kohlenwasserstoffen. Geeignete Trägermaterialien sind insbesondere kohlenstoffhaltige Granulate, Siliciumcarbid-haltige Granulate.
- Kupplung von Methan zu Ethylen, Acetylen und zu Benzol.
- Herstellung von Olefinen durch die katalytische Dehydrierung von Alkanen, beispielsweise Propylen aus Propan oder Buten aus Butan. Geeignete Trägermaterialien sind insbesondere mit Dehydrierkatalsatoren beschichtete Siliciumcarbid-haltige Granulate oder eisenhaltige Formkörper.
- Herstellung von Styrol durch katalytische Dehydrierung von Ethylbenzol. Geeignete Trägermaterialien sind insbesondere mit Dehydrierkatalsatoren beschichtete Siliciumcarbid-haltige Granulate oder eisenhaltige Formkörper.
- Herstellung von Diolefinen durch die katalytische Dehydrierung von Alkanen oder Olefinen, beispielsweise Butadien aus Buten oder aus Butan. Geeignete Trägermaterialien sind insbesondere mit Dehydrierkatalsatoren beschichtete Siliciumcarbid-haltige Granulate oder eisenhaltige Formkörper.
- Herstellung von Aldehyden durch katalytische Dehydrierung von Alkoholen, beispielsweise wasserfreies Formaldehyd aus Methanol. Geeignete Trägermaterialien sind insbesondere silberhaltiges Granulat oder mit Dehydrierkatalsatoren beschichtete Siliciumcarbid-haltige Granulate oder eisenhaltige Formkörper.
- Herstellung von CO durch die Boudouard-Reaktion aus $CO_2$ und Kohlenstoff. Geeignete Trägermaterialien sind insbesondere kohlenstoffhaltige Granulate.
- Herstellung von Wasserstoff und Sauerstoff durch katalytische Wasserthermolyse an katalytischen Kontakten. Geeignete Trägermaterialien sind insbesondere Siliciumcarbid-haltige oder eisenhaltige Granulate, die mit einem Spaltkontakt, beispielsweise einem Ferrit beschichtet sind.

Figuren:

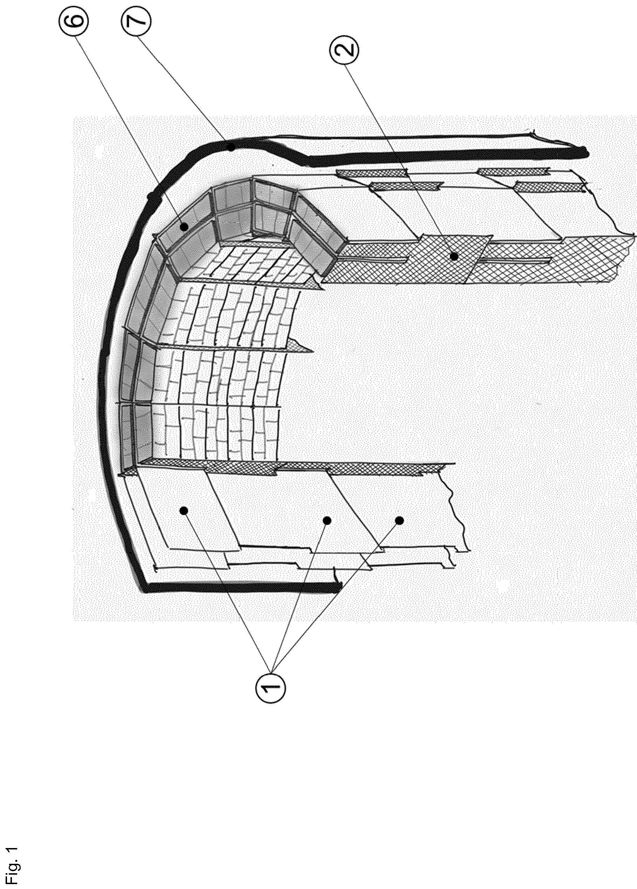

Figur 1: Skizze eines Reaktorsegmentes bestehend aus einem drucktragenden Reaktormantel um ein OCMC-Gerüst, das mit feuerfesten Steinen gefüllt ist.

Legende:

1 = Packung aus drei Querstegen
2a = Seitenstege in den mittleren Lagen
2b = Seitenstege in der untersten Lage
2c = Seitenstege in der obersten Lage

6 = Packung aus Feuerfeststeinen, die in den Kästen des OCMC-Gerüstes eingesetzt sind

8 = Drucktragender Reaktormantel

Figur 2: Draufsicht eines Segmentes eines segmentierten Gerüsts aufgebaut aus Querstegen (1) und Seitenstegen (2) mit vier Querstegen und drei Seitenstegen pro Lage. Die Querstege sind als Kreiszylinderschalen, die Seitenstege als ebene Platten ausgeführt.

Figur 3: Draufsicht segmentierter Gerüste aufgebaut aus Quer- und Seitenstegen mit einem Quersteg pro Lage Links: 12 Segmente, Querstege als ebene Platten ausgeführt, ein Seitensteg pro Quersteg Mitte: 18 Segmente, Querstege als Kreisbögen ausgeführt, ein Seitensteg pro Quersteg Rechts: 12 Segmente, Querstege als abgewinkelte Schalen aufgebaut, zwei Seitenstege pro Quersteg

Der schraffierte Bereich beschreibt jeweils die Ausdehnung eines Segmentes

Die mit 5a, 5b, 5c ... bezeichneten Abschnitte sind die Kästen, die durch die Stege in einem Segment geformt werden.

Figur 4: Draufsicht segmentierter Gerüste aufgebaut aus Quer- und Seitenstegen mit zwei Querstegen pro Lage Links: 12 Segmente, Querstege als ebene Platten ausgeführt, ein Seitensteg pro Quersteg Mitte: 18 Segmente, Querstege als Kreisbögen ausgeführt, ein Seitensteg pro Quersteg Rechts: 12 Segmente, Querstege als abgewinkelte Schalen aufgebaut, zwei Seitenstege pro Quersteg

Der schraffierte Bereich beschreibt jeweils die Ausdehnung eines Segmentes

Die mit 5a, 5b, 5c ... bezeichneten Abschnitte sind die Kästen, die durch die Stege in einem Segment geformt werden.

Figur 5: Draufsicht segmentierter Gerüste aufgebaut aus Quer-, Seiten- und Trennstegen mit einem Quersteg pro Lage

Links: 12 Segmente, Querstege als ebene Platten ausgeführt, ein Seitensteg pro Quersteg, ein loser Trennsteg in jeder Lücke zwischen den Segmenten

Mitte: 18 Segmente, Querstege als Kreisbögen ausgeführt, ein Seitensteg pro Quersteg, ein loser Trennsteg in jeder Lücke zwischen den Segmenten

Rechts: 12 Segmente, Querstege als abgewinkelte Schalen aufgebaut, zwei Seitenstege pro Quersteg, ein loser Trennsteg in jeder Lücke zwischen den Segmenten

Der schraffierte Bereich beschreibt jeweils die Ausdehnung eines Segmentes

Die mit 5a, 5b, 5c ... bezeichneten Abschnitte sind die Kästen, die durch die Stege in einem Segment geformt werden.

Figur 6: Perspektivische Darstellung eines Segmentes in einem Gerüst, bestehend aus plattenförmigen Querstegen und Seitenstegen. In radialer Richtung sind drei Querstege hintereinander angeordnet und mit einem zentralen Seitensteg verbunden. Das Gerüst besteht aus sechs Lagen.

Mitte: Gerüst-Elemente, Querstege mit Schlitz auf der Oberseite (1, Höhe h), Seitensteg der mittleren Lagen (2a. Höhe h), der unteren Lage (2b, Höhe 1,5 h) und der oberen Lage (2c, Höhe 0,5 h). Durch die abweichenden Höhen der unteren und oberen Seitenstege sind die Stege der unterschiedlichen Lagen miteinander verhakt.

Rechts: Perspektivische Darstellung eines Abschnittes eines Segmentes, bestehend aus Querstegen, Seitenstegen und einer Packung aus feuerfesten Steinen eingebettet in Dämmmatten

Legende:

1 = Packung aus drei Querstegen

2a = Seitenstege in den mittleren Lagen

2b = Seitenstege in der untersten Lage

2c = Seitenstege in der obersten Lage

6 = Packung aus Feuerfeststeinen, die in den Kästen des OCMC-Gerüstes eingesetzt sind

8 = Dämmmatten zur Fixierung des Pakets aus Feuerfeststeinen im OCMC-Gerüst

Figur 7: Perspektivische Darstellung eines Segmentes in einem Gerüst, bestehend aus plattenförmigen Querstegen, Seitenstegen und Flachstegen. In radialer Richtung sind drei Querstege hintereinander angeordnet und mit einem zentralen Seitensteg verbunden. Das Gerüst besteht aus vier Lagen. Zwischen den Lagen sind Querstege eingelegt.

Rechts: Gerüst-Elemente, Querstege mit Schlitz auf der Unterseite (1, Höhe h), Seitenstege mit Schlitzen auf der Oberseite (2, Höhe h), Flachstege mit Schlitz auf der Innenseite (3).

Legende:

1 = Packung aus drei Querstegen

2 = Seitenstege

3 = Flachstege

Figur 8 (gehört zum Beispiel "Gerüst mit einer Reihe Querstege"): Draufsicht eines beispielhaften Gerüsts mit einer Reihe Querstege. Die vergrößerte Darstellung zeigt im Detail des Überlappstoßes zwischen benachbarten Querstegen.

Legende:

9 = Nieten
10 = Fugenkitt

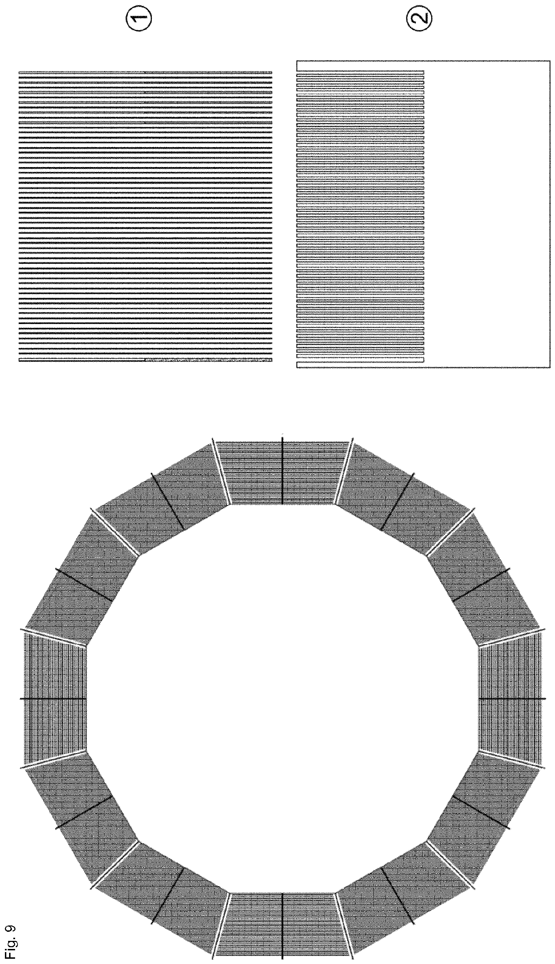

Figur 9 (gehört zum Beispiel "Gerüst mit vielen Querstegen als Strahlungsschirme"):

Links: Draufsicht eines beispielhaften Gerüsts mit vielen Reihen von Querstegen in radialer Richtung.
Rechts: Detaillierte Seitenansicht eines Seitenstegs (2) und eines Bündels von Querstegen (1), die in den Seitensteg eingesteckt werden.

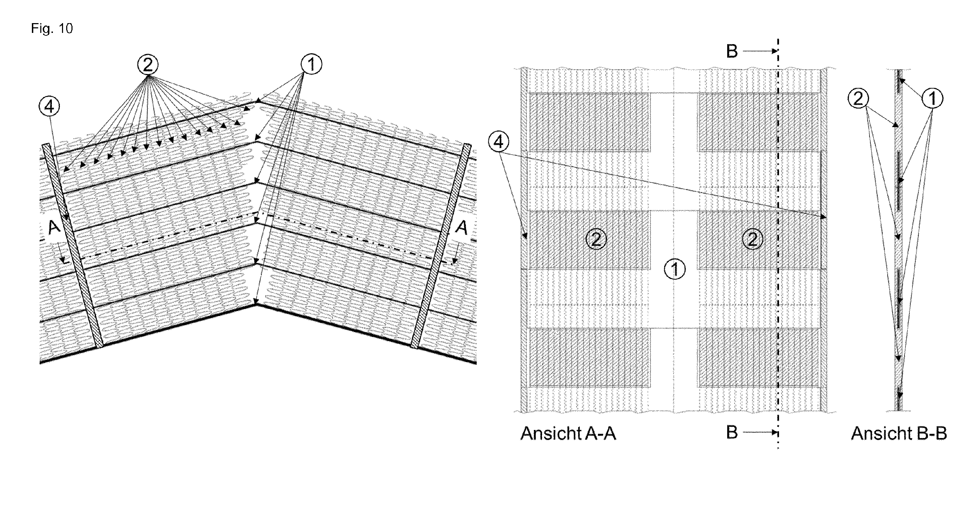

Figur 10 (Gerüst mit profilierten Seitenstegen):

Links: Draufsicht eines Segmentes eines beispielhaften Gerüsts mit vielen profilierten Seiten-und Trennstegen.
Mitte: Vorderansicht mehrerer übereinander angeordneter Lagen.
Rechts: Seitenansicht mehrerer übereinander angeordneter Lagen.

Legende:

1 = Querstege
2 = Profilierte Seitenstege
4 = Trennstege

Figur 11: Perspektivische Darstellung komplexer Stegformen:
Oben: Kombination aus Flachsteg und Trennsteg:

Mitte: Kombination aus Flachsteg, Trennsteg und einem Quersteg (außen).
Unten: Kombination aus Flachsteg, Trennsteg und zwei Querstegen (innen und außen).

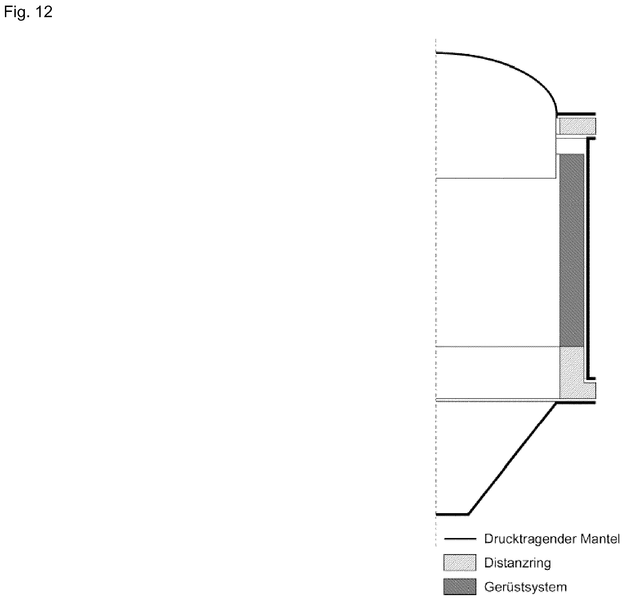

Figur 12:Skizze eines Reaktors mit verkürztem Gerüstsystem im Verhältnis zur Länge des drucktragenden Mantels.

Faserverstärkte Oxidkeramiken, insbesondere OCMC, kombinieren hohe Temperaturbeständigkeit mit hoher Festigkeit, Duktilität und Themoschockbeständigkeit. Das Material behält diese Eigenschaften dauerhaft bis über 1200°C. Bei höheren Temperaturen versprödet der Werkstoff allmählich, jedoch behält er seine Form und eine signifikante Restfestigkeit. Ferner zeichnen sich diese Werkstoffe durch geringe Wärmeleitfähigkeit und geringe elektrische Leitfähigkeit, die diese Werkstoffe als Isolatoren qualifizieren, aus. Ein Gerüst aus OCMC bildet eine Barriere wodurch die Packung eines Reaktors, ein heißes Festbett oder Fließbett (Wanderbett- oder Wirbelbett) von der drucktragenden Reaktorwand getrennt wird. Wenn durch die Packung des Reaktors elektrischer Strom geleitet wird, bildet das OCMC-Gerüst ferner eine wirksame elektrische Isolation zwischen der Reaktorpackung und dem drucktragenden Mantel. Die formschlüssige Verbindung zwischen den Stegen ermöglichen dem Gerüst sich spannungsfrei thermisch auszudehnen. Dadurch sind in dem Reaktor Betriebsbedingungen beherrschbar, die durch hohe Temperaturen sowie starke örtliche und zeitliche Temperaturgradienten gekennzeichnet sind.

Die Eigenschaften der neuartigen Werkstoffe der aufgeschäumten Keramiken und faserverstärkte Oxidkeramiken, insbesondere Halfoam und OCMC, bringen folgende Vorteile:
Aufgeschäumte Keramiken, insbesondere Halfoam, kombinieren eine hohe Festigkeit und Formtreue mit einer guten thermischen Isolationswirkung speziell bei hohen Temperatur > 1000°C. Der Werkstoff ist einsetzbar bis 1700°C.

Faserverstärkte Oxidkeramiken, insbesondere OCMC, kombinieren hohe Temperaturbeständigkeit mit hoher Festigkeit und Duktilität. Das Material behält diese Eigenschaften dauerhaft bis über 1200°C. Bei höheren Temperaturen versprödet der Werkstoff allmählich, jedoch behält er seine Form und eine signifikante Restfestigkeit.

Durch Kombination der beiden Werkstoffe kann eine selbsttragende, leichtgewichtige Auskleidung für Druckreaktoren realisiert werden. Auf die Auskleidung wirkende Kräfte werden vom OCMC-Gerüst aufgenommen. Dadurch können die Formsteine lose verlegt werden, so dass sie sich bei thermischer Ausdehnung flexibel gegeneinander verschieben können. Die rein formschlüssige Fügung des OCMC-Gerüsts und der Feuerfestpackung ermöglicht eine nachgiebige Konstruktion, die sich bei starken Temperaturwechseln (örtlich oder zeitlich) spannungsarm verformen kann.

Die thermische Isolationswirkung der Halfoam-Steine ermöglicht den Abbau der Temperatur von 1500°C (Temperatur der Reaktionszone) auf weniger als 1200°C in einer dünnen Schicht. Daraus resultieren mehrere Vorteile:

Die Auskleidung kann dünner ausgeführt und ist deutlich leichter gegenüber dem Stand der Technik.
Die Stege des Stützgerüstes aus OCMC sind wirksam vor Alterung geschützt.
Da OCMC eine niedrige Wärmeleitfähigkeit hat, werden Kältebrücken durch die Rippenwirkung des Stützgerüsts eliminiert.

Aufgeschäumte Keramiken und faserverstärkte Oxidkeramiken, insbesondere Halfoam und OCMC auf AlOx-Basis, haben identische thermische Ausdehnungskoeffizienten. Dadurch bleiben die Lücken in der Auskleidung über den gesamten Temperaturbereich unverändert und verhindern undefinierte Leckage-Ströme durch die Auskleidung.

Die Einbettung der Feuerfestpackungen durch Dämmmatten im OCMC-Gerüst ermöglicht eine fugenfreie, jedoch flexible und temperaturwechselbeständige Verbindung.

Durch die erzielte Eigenstabilität benötigt die Auskleidung keine Unterstützung durch den drucktragenden Reaktormantel. Dadurch kann ein durchgängiger Spalt zwischen der Auskleidung und dem Reaktormantel gebildet werden.

Die Auskleidung kann separat vom Reaktormantel montiert und demontiert werden. Dadurch ist die Montage des Reaktors, die Reparatur und der Austausch von Verschleißelementen vereinfacht. Insbesondere kann die Auskleidung außerhalb des Reaktors vormontiert und komplett in den Reaktor gehoben werden. Dadurch wird die Stillstandzeit des Reaktors bei Ausbesserung oder Erneuerung der Auskleidung minimiert.

Bei elektrisch beheizten Reaktoren: Die Werkstoffe der Auskleidung sind elektrische Isolatoren und stellen eine wirksame Isolationsschicht zwischen der Schüttung in der Reaktionszone und dem drucktragenden Reaktormantel dar.

Durch den Spalt zwischen der Auskleidung und dem Reaktormantel ist eine zusätzliche, zuverlässige, temperaturunabhängige elektrische Isolation zwischen der Schüttung und dem Reaktormantel gewährleistet.

Die Beschichtung der Innenseite der Auskleidung durch eine unporöse und glatte Decklage hat positive Begleiteffekte:

Die Decklage bietet einen wirksamen Verschleißschutz gegen den Abrieb durch Partikel, z.B. eines Wanderbettes.
Die glatte Oberfläche der Decklage erschwert die Bildung fester Ablagerungen an der Wand. Ablagerungen haften nur lose an der Oberfläche und können durch die Partikelbewegung des Wanderbettes abgelöst werden.
Die Durchlässigkeit der Wand für den Bypass von Gasen aus der Reaktionsstrecke wird reduziert.
Die mehrlagige Struktur aus einer dünnen Lage unporöser und einer oder mehreren dicken Lagen poröser Keramik ist tolerant gegen Rissbildung als Folge von Thermoshocks.

Der schichtweise Aufbau der Auskleidung erlaubt den Einsatz unterschiedlicher Isolationswerkstoffe in den einzelnen Schichten mit jeweils optimalem Eigenschaftsprofil hinsichtlich der thermischen Isolationswirkung und der Temperaturbeständigkeit.

Die Aufteilung der Auskleidung in radialer Richtung durch die parallelen oder konzentrischen Querstege des OCMC-Gerüsts ermöglicht eine versagenstolerante Bauweise: Selbst wenn Teile der Feuerfestpackung brechen, bleiben Schichten intakt, die einen Durchbruch der heißen Schüttung aus der Reaktionszone bis zum drucktragenden Reaktormantel verhindern und so ein kontrolliertes Abstellen des beschädigten Reaktors ermöglichen.

Besonders bei Druckreaktoren relevant: Die optionale Versiegelung der Oberfläche der OCMC-Platten und / oder der Feuerfeststeine unterdrückt die Entstehung großräumiger Konvektionswalzen, wodurch die Isolationswirkung der Auskleidung deutlich geschmälert würde.

Beispiele:

Stand der Technik:

Ein technischer Reaktor wurde mit einer mehrschichtigen Auskleidung aus Feuerfestbeton ausgekleidet. Die Reaktionsstrecke hatte 3000 mm Durchmesser. Die Elektroden zur elektrischen Versorgung der Schüttung waren vertikal in einem Abstand von 3000 mm voneinander angeordnet. Die Auskleidung bestand aus folgenden Schichten:

| Material | Schichtdicke in mm | Wärmeleitfähigkeit In W/m/K |
|---|---|---|
| COMPRIT A95RF-6 | 75 | 2,88 |
| LEGRIT 180-1.4 H 0-3 | 125 | 0,97 |

(fortgesetzt)

| Material | Schichtdicke in mm | Wärmeleitfähigkeit In W/m/K |
|---|---|---|
| PYROSTOP BOARD 1600 | 50 | 0,4 |
| PYROSTOP BOARD 1260 | 50 | 0,28 |

Die Auskleidung war durch Anker am Reaktormantel befestigt. Der drucktragende Reaktormantel hatte einen Innendurchmesser von 3640 mm. Gemäß der Auslegung betrug der Wärmedurchgangskoeffizient der Auskleidung 2,14 W/(m$^2$ K). Gemäß der Auslegung sollte die Verlustleistung des Reaktors 32 kW/m Reaktorlänge und die Temperatur auf der Außenseite des Reaktors 75°C betragen. Im Reaktorbetrieb bei einer Maximaltemperatur von 1400°C und bei einem Betriebsdruck von 1,6 bar absolut waren die Wärmeverluste auf Werte bis 84 kW/m und an der Außenseite des Reaktors war die Temperatur lokal bis 300°C gestiegen. Beim Öffnen des Reaktors wurden Risse in der Auskleidung festgestellt. Die sichtbaren Risse auf der Innenseite der Reaktorwand verliefen unregelmäßig und variierten in Größe und Ausdehnung. Die längsten Risse maßen 1000 mm, die größte Rissweite maß 3 mm. Teilweise war die Auskleidung abgebrochen. Dadurch entstanden in der Auskleidung Vertiefungen mit einer Fläche von 500 cm$^2$ und bis 5 cm Tiefe. Dieses Schadensbild erklärte die Verschlechterung der Isolationswirkung der Auskleidung. Dadurch verschlechterte sich die Reaktorleistung und der Energieverbrauch des Prozesses. Zusätzlich wurde der drucktragende Reaktormantel durch die Temperaturüberhöhung geschwächt. Aus diesen Gründen konnte der Reaktor nicht sicher weiterbetrieben werden.

Beispiel 1: Anwendung als erfindungsgemäßen modularen Gerüsts als elektrische Isolation im Reaktorinnenraum

Dieses Beispiel zeigt die einfachste Konfiguration der erfindungsgemäßen Lösung. Ein Wanderbettreaktor mit widerstandsbeheizter Schüttung dient beispielsweise zur Pyrolyse von Kohlenwasserstoffen. Die Reaktionsstrecke hat 3000 mm Durchmesser. Die Elektroden zur elektrischen Versorgung der Schüttung sind vertikal in einem Abstand von 3000 mm voneinander angeordnet. Der drucktragende Reaktormantel hat einen Innendurchmesser von 3100 mm. Der Reaktormantel ist auf der Außenseite mit einer Kühlschlange ausgestattet, die mit Wasser durchströmt wird, so dass die Manteltemperatur auf max. 50°C geregelt ist. Die Reaktionsstrecke wird von einem modularen Gerüst begrenzt. Die Stege des Gerüsts sind aus OCMC. Das Gerüst besteht aus einer Reihe von Querstegen, die jeweils mit einem Seitensteg gestützt sind. Alle Stege sind 3 mm dick. Das Gerüst umfasst sechs Segmente und fünf übereinander angeordnete Lagen. Die Querstege benachbarter Segmente überlappen einander in Umfangsrichtung. Die Überlappstöße sind mit einem hochtemperaturfesten Kitt ausgefüllt und mit Nieten verbunden. Dadurch bildet das Gerüst einen staubdichten Abschluss der Reaktionszone zum Ringraum zwischen dem Gerüst und dem drucktragenden Reaktormantel. Im Ringraum zwischen dem Gerüst und dem drucktragenden Reaktormantel strömt $CO_2$ als Spülgas. Die Temperatur im Zentrum der Reaktionszone beträgt 1400°C. Die Temperatur des Gerüsts beträgt 425°C. Diese Lösung zeichnet sich durch eine kompakte und leichte Bauweise aus. Die Reaktionsstrecke nimmt 93,5% des Querschnitts ein, der vom drucktragenden Mantel umschlossen ist. Das Gewicht des Gerüsts, das aus dem OCMC-Stegen besteht, beträgt 250 kg. Weiterhin erfüllt das Gerüst die Funktion als elektrische Isolation der Reaktionsstrecke gegen die drucktragende Reaktorwand. Gleichzeitig hat das Gerüst eine geringe wärmeisolierende Wirkung. Dadurch stellt sich an der Innenseite des Gerüsts eine so niedrige Temperatur ein, dass das Gerüst sauber gegen kohlenstoffhaltige Ablagerungen gehalten wird. Dadurch wird eine zuverlässige stationäre Fahrweise des Prozesses ermöglicht.

Beispiel 2: Anwendung als erfindungsgemäßen modularen Gerüsts als Strahlungsschirm Dieses Beispiel zeigt eine Konfiguration der erfindungsgemäßen Lösung, die eine Gerüst bestehend aus OCMC-Stegen vorsieht. Ein Wanderbettreaktor mit widerstandsbeheizter Schüttung dient beispielsweise zur Pyrolyse von Kohlenwasserstoffen. Die Reaktionsstrecke hat 3000 mm Durchmesser. Die Elektroden zur elektrischen Versorgung der Schüttung sind vertikal in einem Abstand von 3000 mm voneinander angeordnet. Der drucktragende Reaktormantel hat einen Innendurchmesser von 3700 mm. Der Reaktormantel ist auf der Außenseite unisoliert. Die Reaktionsstrecke wird von einem Gerüst aus OCMC-Stegen begrenzt. Das Gerüst umfasst zwölf Segmente in Umfangsrichtung und zehn übereinander angeordnete Lagen. Jede Lage in jedem Segment umfasst 60 Reihen von Querstegen, die jeweils mit einem Seitensteg gestützt sind. Die Querstege der inneren Reihe, die unmittelbar mit der Reaktionsstrecke in Berührung stehen, sind 3mm dick. Die Innenseite dieser Querstege ist mit einer plasmagespritzten Schutzschicht beschichtet. Die Querstege benachbarter Segmente in der inneren Reihe überlappen einander in Umfangsrichtung. Die Überlappstöße sind mit einem hochtemperaturfesten Kitt ausgefüllt und mit Nieten verbunden. In den übrigen Reihen sind die Querstege jeweils 1 mm dick und in einem radialen Abstand von 2 mm voneinander entfernt. Die Enden diese Querstege sind lose. Die Seitenstege sind 3 mm dick. Im Ringraum zwischen dem Gerüst und dem drucktragenden Reaktormantel strömt $CO_2$ als Spülgas. Diese Lösung zeichnet sich durch eine mechanisch hervorragend robuste und verhältnismäßig leichte Bauweise aus.

Das gesamte Gerüst besteht aus dem duktilen und thermoschockbeständigen OCMC. Die ineinander gesteckten Stege bilden ein mechanisch stabiles Gerüst, das gleichzeitig Verformungen durch thermische Ausdehnung ausgleichen kann. Das Gewicht des Gerüsts beträgt ca. 1,6 tn/m Reaktorlänge. Weiterhin erfüllt das Gerüst die Funktion als elektrische Isolation der Reaktionsstrecke gegen die drucktragende Reaktorwand. Weiterhin ist das Gerüst wirksam als thermische Isolation, wobei die in Reihe von innen nach außen angeordnete Querstege als Strahlungsschirme funktionieren. Der enge Abstand zwischen den Querstegen bewirkt eine Stagnation der Gasschichten, wodurch die Isolationswirkung unterstützt wird. Die Temperatur im Zentrum der Reaktionszone beträgt 1350°C. Die Temperatur an der Innenseite des Gerüsts beträgt 1200°C. Die Wärmeverluste der Isolation betragen 45 kW/m Reaktorlänge. Die Temperatur des drucktragenden Reaktormantels beträgt 85°C.

Beispiel 3 (Halfoam und Feuerleichtsteine)

Dieses Beispiel zeigt eine erfindungsgemäße Lösung, die direkt mit der Basiskonfiguration vergleichbar ist. Es handelt sich um eine 320mm dicke Auskleidung bestehend aus drei Schichten in radialer Richtung. Die innere Schicht besteht aus HALFOAM des Herstellers Morgan Advanced Materials Haldenwanger GmbH. Die zweite Schicht besteht aus Formsteinen des Typs PROMATON 28 des Herstellers Etex Building Performances GmbH. Die dritte Schicht besteht aus Formsteinen des Typs PROMATON 26 desselben Herstellers. Die Steine sind als Läuferverband verlegt. Das OCMC-Gerüst besteht aus 18 Segmenten mit kreisringförmigem Querschnitt. Ein Segment besteht aus einem Seitensteg und aus zwei Querstegen. Der innere Quersteg hat einen Durchmesser von 3,63m und umfasst die innere Schicht der Auskleidung. Der äußere Quersteg hat einen Durchmesser von 4,09m und umfasst die zwei äußeren Schichten der Auskleidung. Das Gewicht der Auskleidung beträgt ca. 3,35 tn/m. Zwischen dem äußeren Quersteg und der Reaktorwand entsteht ein Spalt mit einer Breite von 20mm. Im Zentrum des Wanderbettes herrscht eine Temperatur um 1500°C. Die Tabelle zeigt den radialen Temperaturverlauf in der Auskleidung.

| Schicht | Material | Innen-Durchmesser [m] | Schichtdicke [mm] | Maximale Temperatur [°C] | Mittlere Temperatur [°C] |
|---|---|---|---|---|---|
| Reaktionszone | Wanderbett | 0 | 1700 | 1500 | 1440 |
| Iso-Schicht 1 | Halfoam | 3,4 | 114 | 1379 | 1256 |
| Iso-Schicht 2 | Promaton 28 | 3,63 | 114 | 1133 | 919 |
| Iso-Schicht 3 | Promaton 26 | 3,86 | 114 | 706 | 392 |
| Reaktorwand | Stahl | 4,13 | 20 | 78 | 78 |

Die längenbezogenen Wärmeverluste bei einer Temperatur von 1500°C im Zentrum des Reaktors betragen 15,2 kW/m.

In dieser Konfiguration baute die innere Schicht der Auskleidung die Temperatur erheblich ab: T = 244 K. Dadurch ist die Temperatur bis zum inneren Quersteg soweit abgefallen, dass der OCMC-Werkstoff keiner signifikanten Alterung unterliegt.

Die erfindungsgemäße Auskleidung ist erheblich leichter als die Referenzkonfiguration in Beispiel 1. Weitere Vorteile der erfindungsgemäßen Konfiguration gegenüber der Referenzkonfiguration ergeben sich aus der wärmeisolierenden Wirkung der ersten Auskleidungsschicht:

1. Das Temperaturfeld über den Querschnitt des Wanderbettes ist gleichmäßiger mit einer Temperaturdifferenz zwischen Achse und Wand von $\Delta T = 73$ K.
2. Die Temperatur auf der Außenseite der ersten Auskleidungsschicht wird auf deutlich unter 1200°C gesenkt, so dass ein Stützgerüst aus OCMC-Werkstoffen dauerhaft seine vorteilhaften mechanischen Eigenschaften behält. Ein weiterer Vorteil ist die niedrigere Temperatur an der Reaktorwand. Diese Vorteile lassen sich auf die überlegenen Isolationseigenschaften von HALFOAM gegenüber Feuerfeststeinen aus Alumina K99 zurückführen.

Beispiel 4 (Halfoam, Feuerleichtsteine und Superisolation)

Dieses Beispiel zeigt eine optimierte Version der erfindungsgemäßen Lösung bezüglich Isolationswirkung und Gewicht. Es handelt sich um eine 320mm dicke Auskleidung bestehend aus vier Schichten in radialer Richtung. Die zwei inneren Schichten bestehen aus HALFOAM des Herstellers Morgan Advanced Materials Haldenwanger GmbH. Die dritte Schicht besteht aus Formsteinen des Typs PROMATON 28 des Herstellers Etex Building Performances GmbH.

Die vierte Schicht wird aus MICORTHERM PANEL des Herstellers Etex Building Performances GmbH zusammengesetzt, die an der Außenseite der äußeren Querstege verklebt sind. Die Steine sind als Läuferverband verlegt. Das OCMC-Gerüst besteht aus 18 Segmenten mit kreisringförmigem Querschnitt. Ein Segment besteht aus einem Seitensteg und aus zwei Querstegen. Der innere Quersteg hat einen Durchmesser von 3,63m und umfasst die zwei inneren Schichten der Auskleidung. Der äußere Quersteg hat einen Durchmesser von 4,03m und umfasst die dritte Schicht der Auskleidung. Das Gewicht der Auskleidung beträgt ca. 3,2 tn/m, Zwischen dem äußeren Quersteg und der Reaktorwand entsteht ein Spalt mit einer Breite von 20mm. Im Zentrum des Wanderbettes herrscht eine Temperatur um 1500°C. Die Tabelle zeigt den radialen Temperaturverlauf in der Auskleidung.

Die Superisolation wurde in Kassetten an der Reaktorwand befestigt.

| Schicht | Material | InnenDurchmesser [m] | Schichtdicke [mm] | Maximale Temperatur [°C] | Mitlere Temperatur [°C] |
|---|---|---|---|---|---|
| Reaktionszone | Wanderbett | 0 | 1700 | 1500 | 1464 |
| Iso-Schicht 1 | Halfoam | 3,4 | 89 | 1427 | 1368 |
| Iso-Schicht 2 | Halfoam | 3,58 | 114 | 1309 | 1238 |
| Iso-Schicht 3 | Promaton 28 | 3,81 | 114 | 1168 | 1051 |
| Iso-Schicht 4 | Microtherm | 4,03 | 25 | 933 | 496 |
| Reaktorwand | Stahl | 4,13 | 0 | 58 | 58 |

Die Wärmeverluste betragen 9,15 kW/m, sind also deutlich niedriger als in den Konfigurationen der Beispiele 1 und 2. In dieser Konfiguration senken die zwei inneren Schichten der Auskleidung die Temperatur soweit ab, dass der OCMC-Werkstoff keiner signifikanten Alterung unterliegt. Die dritte Schicht senkt die Temperatur soweit ab, dass eine Superisolation eingesetzt werden kann, die eine sehr starke Isolationswirkung aber eine auf ca. 1000°C limitierte Temperaturbeständigkeit besitzt.

Die erfindungsgemäße Auskleidung ist leichter als die erfindungsgemäße Konfiguration in Beispiel 2. Weitere Vorteile der erfindungsgemäßen Konfiguration gegenüber der Konfiguration in Beispiel 2 sind das homogenere Temperaturfeld über den Querschnitt des Wanderbettes (Temperaturdifferenz: ΔT=36K) und die niedrigere Temperatur an der Reaktorwand (T = 58°C). Dadurch kann ein Berührschutz auf der Außenseite des Reaktors eingespart werden, was Kosten reduziert und die Zugänglichkeit des Reaktors verbessert.

**Patentansprüche**

1. Vorrichtung aus mindestens einem drucktragenden Vorrichtungsmantel und mindestens einem innerhalb des Vorrichtungsmantels angeordneten modularen Gerüstsystem aus zwei unterschiedlichen Steg-Arten, **dadurch gekennzeichnet, dass** mehrere Querstege mindestens ein Prisma oder einen Zylinder bilden und mehrere Seitenstege in das Prismen- oder Zylinder-Innere hineinragen, wobei die Querstege und die Seitenstege ineinander einsteckbar sind und/oder mit Hilfe von einem oder mehreren Verbindungselementen verbindbar sind, wobei der Werkstoff der Stege keramische Faserverbundwerkstoffe beinhaltet.

2. Vorrichtung nach Anspruch 1, **dadurch gekennzeichnet, dass** das modulare Gerüstsystem selbsttragend ist.

3. Vorrichtung nach mindestens einem der Ansprüche 1 oder 2, **dadurch gekennzeichnet, dass** die Werkstoffe der Stege oxidische Faserverbundwerkstoffe beinhalten.

4. Vorrichtung nach mindestens einem der Ansprüche 1 bis 3, **dadurch gekennzeichnet, dass** die Querstege als gewellte, gewinkelte oder ebene Platten oder als Zylinderschalen geformt sind und die Seitenstege als gewellte oder ebene Platten geformt sind.

5. Vorrichtung nach mindestens einem der Ansprüche 1 bis 4, **dadurch gekennzeichnet, dass** die Vorrichtung mehrere aus Querstegen geformte übereinander angeordnete Lagen aufweist.

6. Vorrichtung nach mindestens einem der Ansprüche 1 bis 5, **dadurch gekennzeichnet, dass** in radialer Richtung mehrere parallele oder konzentrisch-ellipsenbogenförmige Querstege verwendet werden, die in der Draufsicht als ineinander liegende Vielecke, oder ineinander liegende Ellipsen, angeordnet sind.

7. Vorrichtung nach mindestens einem der Ansprüche 1 bis 6, **dadurch gekennzeichnet, dass** in die Lücken zwischen den in Umfangsrichtung benachbarten Querstegen Trennstege einsteckbar sind.

8. Vorrichtung nach mindestens einem der Ansprüche 1 bis 7, **dadurch gekennzeichnet, dass** zwischen zwei übereinander angeordneten Lagen von Querstegen Flachstege einschiebbar sind.

9. Vorrichtung nach mindestens einem der Ansprüche 1 bis 8, **dadurch gekennzeichnet, dass** die Vorrichtung durch ein Fundament gestützt wird und mit diesem durch eine lösbare Verbindung verbunden ist.

10. Vorrichtung nach mindestens einem der Ansprüche 1 bis 9, **dadurch gekennzeichnet, dass** die Vorrichtung eine innerhalb des modularen Gerüstsystems angeordnete Auskleidung aus Feuerfeststeinen aufweist.

11. Vorrichtung nach Anspruch 10, **dadurch gekennzeichnet, dass** das Gerüstsystem in Kästen aufteilbar ist, wobei unter einem Kasten der Bereich verstanden wird, den zwei in radialer Richtung benachbarte parallele oder konzentrisch-ellipsenbogenförmige Querstege und die entsprechenden Seitenstege, sowie die Lücke zwischen den in Umfangsrichtung benachbarten Querstegen bzw. der in diese Lücke vorteilhaft eingesteckte Trennsteg einschließen; und diese Kästen jeweils mit 1 bis 2000 Feuersteinen oder mit Katalysatoren ausgefüllt sind und die Steine in vertikaler und horizontaler Richtung schichtartig angeordnet sind und zwischen den Steinen und den Kasten begrenzenden Stegen eine Lücke ist.

12. Vorrichtung nach Anspruch 10 oder 11, **dadurch gekennzeichnet, dass** die Auskleidung aus Feuerfeststeinen einen Steinverbund beinhaltet, der mehrere in radialer Richtung hintereinander angeordnete Stein-Packungen aus (i) aufgeschäumter Keramik und (ii) gesinterter gegossener oder extrudierter Keramik oder (i) aufgeschäumter Keramik, (ii) gesinterter gegossener oder extrudierter Keramik und (iii) verpressten keramischen Fasern oder (i) aufgeschäumter Keramik, (ii) gesinterter gegossener oder extrudierter Keramik, (iii) verpressten keramischen Fasern und (iv) vakuumgeformten Faserplatten oder Platten beinhaltend mikroporöser pyrogenes Siliciumdioxid beinhaltet.

13. Vorrichtung nach mindestens einem der Ansprüche 10 bis 12, **dadurch gekennzeichnet, dass** die Lücke zwischen den Steinen und den benachbarten Stegen und/oder die Lücke zwischen den in Umfangsrichtung benachbarten Stein-Packungen zumindest teilweise mit Dämmmatten ausgefüllt wird.

14. Vorrichtung nach mindestens einem der Ansprüche 1 bis 13, **dadurch gekennzeichnet, dass** sich zwischen dem modularen Gerüstsystem und dem drucktragenden Vorrichtungsmantel ein durchgängiger Spalt befindet.

15. Vorrichtung nach Anspruch 14, **dadurch gekennzeichnet, dass** der Spalt durch einen gerichteten Gasstrom gespült wird.

16. Verwendung der Vorrichtung nach mindestens einem der Ansprüche 1 bis 15 für

   - die Herstellung von Synthesegas durch Reformierung von Kohlenwasserstoffen mit Wasserdampf und / oder Kohlenstoffdioxid
   - die Herstellung von Wasserstoff und Kohlenstoff als Koppelprodukte durch Pyrolyse von Kohlenwasserstoffen
   - Herstellung von Blausäure aus Methan und Ammoniak oder aus Propan und Ammoniak
   - Herstellung von Olefinen durch Wasserdampfspaltung von Kohlenwasserstoffen
   - Kupplung von Methan zu Ethylen, Acetylen und/oder Benzol
   - Herstellung von Olefinen durch Dehydrierung von Alkanen
   - Herstellung von Styrol durch Dehydrierung von Ethylbenzol
   - Herstellung von Diolefinen durch Dehydrierung von Alkanen oder Olefinen
   - Herstellung von Aldehyden durch Dehydrierung von Alkoholen
   - Herstellung von Kohlenstoffmonoxid durch Boudouard-Reaktion aus Kohlenstoffdioxid und Kohlenstoff
   - Herstellung von Wasserstoff und Sauerstoff durch Wasserthermolyse an katalytischen Kontakten.

**Claims**

1. An apparatus composed of at least one pressure-rated apparatus shell and at least one modular framework system composed of two different types of framework element and arranged within the apparatus shell, wherein multiple transverse elements form at least one prism or one cylinder and multiple lateral elements project into the interior of the prism or cylinder, where the transverse elements and the lateral elements can be inserted into one another and/or can be connected with the aid of one or more connecting elements, where the material of the framework elements includes ceramic fiber composite materials.

2. The apparatus according to claim 1, wherein the modular framework system is self-supporting.

3. The apparatus according to at least one of claims 1 and 2, wherein the materials of the framework elements include oxidic fiber composite materials.

4. The apparatus according to at least one of claims 1 to 3, wherein the transverse elements take the form of corrugated, angled or flat sheets or of cylindrical shells and the lateral elements take the form of corrugated or flat sheets.

5. The apparatus according to at least one of claims 1 to 4, wherein the apparatus has multiple layers formed from transverse elements and arranged one on top of another.

6. The apparatus according to at least one of claims 1 to 5, wherein multiple parallel transverse elements or transverse elements in the form of concentric elliptical arcs in radial direction are used, and in top view these are arranged as concentric polygons, or concentric ellipses.

7. The apparatus according to at least one of claims 1 to 6, wherein separating elements can be inserted into the gaps between the adjacent transverse elements in circumferential direction.

8. The apparatus according to at least one of claims 1 to 7, wherein flat sheets can be interleaved between two layers of transverse elements arranged one on top of the other.

9. The apparatus according to at least one of claims 1 to 8, wherein the apparatus is supported by a foundation and is connected thereto by a disconnectable connection.

10. The apparatus according to at least one of claims 1 to 9, wherein the apparatus has a lining of refractory bricks arranged within the modular framework system.

11. The apparatus according to claim 10, wherein the framework system can be divided into boxes, where one box is understood to mean the region enclosed by two parallel transverse elements or transverse elements in the form of concentric elliptical arcs that are adjacent in radial direction and the corresponding lateral elements, and the gap between the adjacent transverse elements in circumferential direction or the separating element advantageously inserted into this gap; and these boxes are each filled with 1 to 2000 refractory bricks or with catalysts and the bricks are arranged in the form of layers in the vertical and horizontal direction and there is a gap between the bricks and framework elements that bound the box.

12. The apparatus according to claim 10 or 11, wherein the lining of refractory bricks includes a brick assembly including multiple brick packings arranged successively in radial direction and composed of

    (i) foamed ceramic and (ii) sintered cast or extruded ceramic or (i) foamed ceramic, (ii) sintered cast or extruded ceramic and (iii) compressed ceramic fibers or (i) foamed ceramic,
    (ii) sintered cast or extruded ceramic, (iii) compressed ceramic fibers and (iv) vacuum-formed fiberboards or boards including microporous fumed silica.

13. The apparatus according to at least one of claims 10 to 12, wherein the gap between the bricks and the adjacent framework elements and/or the gap between the brick packings that are adjacent in circumferential direction is at least partly filled with insulation mats.

14. The apparatus according to at least one of claims 1 to 13, wherein there is a continuous gap between the modular framework system and the pressure-rated apparatus shell.

**15.** The apparatus according to claim 14, wherein the gap is purged by a directed gas stream.

**16.** The use of the apparatus according to at least one of claims 1 to 15 for

- the preparation of synthesis gas by reforming hydrocarbons with steam and/or carbon dioxide
- the preparation of hydrogen and carbon as coproducts by pyrolysis of hydrocarbons
- preparation of hydrogen cyanide from methane and ammonia or from propane and ammonia
- preparation of olefins by steamcracking of hydrocarbons
- coupling of methane to give ethylene, acetylene and/or benzene
- preparation of olefins by dehydrogenation of alkanes
- preparation of styrene by dehydrogenation of ethylbenzene
- preparation of diolefins by dehydrogenation of alkanes or olefins
- preparation of aldehydes by dehydrogenation of alcohols
- preparation of carbon monoxide by Boudouard reaction from carbon dioxide and carbon
- preparation of hydrogen and oxygen by water thermolysis over catalysts.

**Revendications**

**1.** Dispositif constitué d'au moins une chemise sous pression et d'au moins un système d'échafaudage modulaire disposé à l'intérieur de la chemise, constitué de deux types différents de traverses, **caractérisé en ce que** plusieurs traverses transversales forment au moins un prisme ou un cylindre et plusieurs traverses latérales pénètrent à l'intérieur du prisme ou du cylindre, les traverses transversales et les traverses latérales pouvant s'enficher les unes dans les autres et/ou pouvant être reliées à l'aide d'un ou plusieurs éléments de liaison, le matériau des traverses contenant des matériaux composites de fibres céramiques.

**2.** Dispositif selon la revendication 1, **caractérisé en ce que** le système d'échafaudage modulaire est autoportant.

**3.** Dispositif selon au moins l'une des revendications 1 ou 2, **caractérisé en ce que** les matériaux des traverses contiennent des matériaux composites de fibres de type oxyde.

**4.** Dispositif selon au moins l'une des revendications 1 à 3, **caractérisé en ce que** les traverses transversales sont formées comme des plaques ondulées, coudées ou planes ou des enveloppes de cylindre, et les traverses latérales sont formées comme des plaques ondulées ou planes.

**5.** Dispositif selon au moins l'une des revendications 1 à 4, **caractérisé en ce que** l'Dispositif comprend plusieurs couches disposées les unes au-dessus des autres, formées de traverses transversales.

**6.** Dispositif selon au moins l'une des revendications 1 à 5, **caractérisé en ce qu'**on utilise dans la direction radiale plusieurs traverses transversales parallèles ou en forme d'arcs d'ellipse concentrique, qui, en vue de dessus, sont disposées sous forme de polygones pénétrant les uns dans les autres ou sous forme d'ellipses pénétrant les unes dans les autres.

**7.** Dispositif selon au moins l'une des revendications 1 à 6, **caractérisé en ce que** des séparateurs peuvent être enfichés entre les traverses transversales voisines dans la direction périphérique.

**8.** Dispositif selon au moins l'une des revendications 1 à 7, **caractérisé en ce que** des traverses plates peuvent être insérées par glissement entre deux couches disposées l'une au-dessus de l'autre.

**9.** Dispositif selon au moins l'une des revendications 1 à 8, **caractérisé en ce que** l'Dispositif est soutenu par une fondation et est relié à cette dernière par une liaison amovible.

**10.** Dispositif selon au moins l'une des revendications 1 à 9, **caractérisé en ce que** l'Dispositif comprend un revêtement en briques réfractaires, disposé à l'intérieur du système d'échafaudage modulaire.

**11.** Dispositif selon la revendication 10, **caractérisé en ce que** le système d'échafaudage est subdivisé en caissons, un caisson s'entendant comme étant la zone qu'englobent deux traverses transversales parallèles ou en forme d'arcs d'ellipses concentriques, voisines dans la direction radiale, et les traverses latérales correspondantes, ainsi que l'espace entre les traverses transversales voisines dans la direction périphérique ou le séparateur avantageusement enfiché dans cet espace, et chacun de ces caissons est rempli de 1 à 2 000 briques réfractaires ou de catalyseurs, et les briques sont disposées en couches dans la direction verticale et dans la direction horizontale, un espace existant entre les briques et les traverses délimitant le caisson.

**12.** Dispositif selon la revendication 10 ou 11, **caractérisé en ce que** le revêtement en briques réfractaires contient un appareil de briques qui contient des groupes de briques disposés les uns derrière les autres dans la direction radiale, constitués (i) de céramique expansée et (ii) de céramique frittée, coulée ou extrudée ou (i) de céramique expansée, (ii) de céramique frittée, coulée ou extrudée et (iii) de fibres céramiques comprimées ou (i) de céramique expansée, (ii) de céramique frittée, coulée ou extrudée, (iii) de fibres céramiques comprimées et (iv) de plaques de fibres formées sous vide ou de plaques contenant du dioxyde de silicium pyrogène microporeux.

**13.** Dispositif selon au moins l'une des revendications 10 à 12, **caractérisé en ce que** l'espace entre les briques et les traverses voisines et/ou l'espace entre les groupes de briques voisins dans la direction périphérique sont au moins partiellement remplis de matelas isolants.

**14.** Dispositif selon au moins l'une des revendications 1 à 13, **caractérisé en ce qu'**entre le système d'échafaudage modulaire et la chemise sous pression se trouve une fente continue.

**15.** Dispositif selon la revendication 14, **caractérisé en ce que** la fente est rincée par un courant de gaz dirigé.

**16.** Utilisation de l'Dispositif selon au moins l'une des revendications 1 à 15 pour

- la fabrication de gaz de synthèse par reformage d'hydrocarbures avec de la vapeur d'eau et/ou du dioxyde de carbone
- la fabrication d'hydrogène et de carbone en tant que produits couplés par pyrolyse d'hydrocarbures
- la fabrication d'acide cyanhydrique à partir de méthane et d'ammoniac ou à partir de propane et d'ammoniac
- la fabrication d'oléfines par clivage de l'hydrogène d'hydrocarbures
- le couplage de méthane en éthylène, acétylène et/ou benzène
- la fabrication d'oléfines par déshydrogénation d'alcanes
- la fabrication de styrène par déshydrogénation d'éthylbenzène
- la fabrication de dioléfines par déshydrogénation d'alcanes ou d'oléfines
- la fabrication d'aldéhydes par déshydrogénation d'alcools
- la fabrication de monoxyde de carbone par réaction de Boudouard à partir de dioxyde de carbone et de carbone
- la fabrication d'hydrogène et d'oxygène par thermolyse de l'eau sur contacts catalytiques.

Fig. 1

Fig. 2

Fig. 3

Fig. 4

Fig. 5

Fig. 6

Fig. 7

Fig. 8

Fig. 9

Fig. 10

Ansicht A-A

Ansicht B-B

Fig. 11

Fig. 12

— Drucktragender Mantel

Distanzring

Gerüstsystem

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8714113 U1
- US 2982622 A
- EP 2019051466 W
- DE 102015202277
- WO 895285 A
- WO 201118516 A
- WO 2004111562 A
- US 8211524 B
- WO 0722750 A
- WO 2014125024 A

**In der Beschreibung aufgeführte Nicht-Patentliteratur**

- Korrosions-und thermoschockbeständige Feuerfestmaterialien für Flugstromvergasungsanlagen auf Al2O3-Basis-Werk-stoffentwicklung und Korrosionsuntersuchungen. **GEHRE, P.** Dissertation. Technische Universität Bergakademie, 2013
- **M. SCHMÜCKER.** Faserverstärkte oxidkeramische Werkstoffe. *Materialwissenschaften und Werkstofftechnik,* 2007, vol. 38 (9), 698-704
- **SCHMÜCKER, M.** Faserverstärkte oxidkeramische Werkstoffe. *Materialwissenschaft und Werkstofftechnik,* 2007, vol. 38 (9), 698-704